(19) Europäisches Patentamt
European Patent Office
Office européen des brevets

(11) EP 0 717 086 B1

(12) EUROPÄISCHE PATENTSCHRIFT

(45) Veröffentlichungstag und Bekanntmachung des Hinweises auf die Patenterteilung:
**26.04.2000 Patentblatt 2000/17**

(51) Int Cl.[7]: **C09B 67/08**, C09B 67/18, C09D 17/00, C08K 9/10

(21) Anmeldenummer: **95810769.0**

(22) Anmeldetag: **06.12.1995**

(54) **Mit Metallphosphatkomplexen und Aminen beschichtete organische Pigmente**

Organic pigments coated with metalphosphate complexes and amines

Pigments organiques revêtus avec des complexes de métal-phosphates et des amines

(84) Benannte Vertragsstaaten:
**CH DE FR GB IT LI**

(30) Priorität: **15.12.1994 CH 379594**

(43) Veröffentlichungstag der Anmeldung:
**19.06.1996 Patentblatt 1996/25**

(73) Patentinhaber: **Ciba Specialty Chemicals Holding Inc.**
**4057 Basel (CH)**

(72) Erfinder:
- **Chassot, Laurent, Dr.**
  **CH-1724 Praroman (CH)**
- **Bugnon, Philippe, Dr.**
  **CH-1724 Essert (CH)**

(56) Entgegenhaltungen:
**EP-A- 0 062 304**
**EP-A- 0 528 601**
**US-A- 3 946 134**
**US-A- 4 576 649**

Bemerkungen:
Die Akte enthält technische Angaben, die nach dem Eingang der Anmeldung eingereicht wurden und die nicht in dieser Patentschrift enthalten sind.

EP 0 717 086 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft organische Pigmente, deren Teilchenoberfläche mit einem festhaftenden Überzug versehen ist, der aus Ca-, Mg-, Al-, Zn-, Zr- oder Ti-Phosphatkomplexen und Aminen besteht, sowie deren Herstellung und deren Verwendung. Sie zeichnen sich durch hervorragende Eigenschaften, insbesondere durch den hohen Glanz der damit erhaltenen Ausfärbungen, durch sehr gute Dispergierbarkeit und hohe Dispersionsbeständigkeit sowie durch ein sehr gutes rheologisches Verhalten der damit hergestellten Lackanreibungen oder Druckfarben aus.

Aus GB 1 116 567, US 3 827 902, US 4 220 473, US 4 462 833 und EP 062 304 ist die Behandlung von Azopigmenten mit verschiedenen polyfunktionellen Aminen bekannt. Es wird dabei ausgeführt, dass dieser Überzug insbesondere den gelben Azo-Diarylidpigmenten eine bessere Rheologie in Drucktinten verleiht. Aus WO 91/13943 ist die Behandlung von Pigmentteilchen mit Polyalkylenimin bekannt. Es wird dabei ausgeführt, dass dieser Überzug insbesondere deckenden Azopigmenten eine bessere Beständigkeit gegen gewisse Chemikalien, eine bessere Lichtbeständigkeit sowie eine bessere Rheologie und einen besseren Glanz in Automobillacken verleiht.

Dispergatoren allgemein, aminische Dispergatoren inbegriffen, haben aber den Nachteil, dass sie insbesondere bezüglich ihrer Aktivität auf Pigmente sehr spezifisch sind: ein bestimmter Dispergator ist jeweils nur für wenige Pigmente und für wenige zu pigmentierende Formulierungen geeignet. Die Unverträglichkeit der für bestimmte Pigmente bestgeeigneten Dispergatoren in vielen Applikationssystemen und die Unwirksamkeit der für bestimmte Applikationssysteme bestgeeigneten Dispergatoren für viele Pigmente erschweren dem Applikationsfachmann die Aufgabe beträchtlich.

Aus JP 91/26 767 sind modifizierte Diphenylpyrrolopyrrolpigmente, welche als Dispergatoren bezeichnet werden, sowie solche Dispergatoren enthaltende Pigmentzusammensetzungen bekannt. Es wird dabei ausgeführt, dass letztere unter anderem eine bessere Rheologie und einen besseren Glanz als dispergatorfreie Pigmente innehaben.

Solche Dispergatoren sind aber aufgrund ihrer von Pigmenten abgeleiteten Struktur farbig, ohne selbst die Vorteile qualitativ hochstehender Pigmente aufzuweisen. Dadurch werden die Eigenschaften der damit dispergierten Pigmentzusammensetzungen, insbesondere deren Migrations- sowie Licht- und Wetterechtheit, in unerwünschter Weise verändert.

Aus EP-A-659840, das ein Dokument im Sinne von Artikel 54(3) EPU darstellt, ist die Beschichtung von Pigmenten mit Zr- oder Ti-Phosphat-Komplexen und einem Aminoalkylacrylat-Harz bekannt.

Aus US 3 946 134 ist unter anderem die Beschichtung von Pigmentteilchen mit Albeziehungsweise Mg-Phosphatkomplexen bekannt. Es wird dabei ausgeführt, dass dieser Überzug anorganischen und organischen Pigmenten eine bessere Beständigkeit gegen Chemikalien und eine bessere Wärme- und Lichtbeständigkeit verleiht.

Es stellt sich aber heraus, dass solche Beschichtungen den heutigen Anforderungen, insbesondere inbezug auf Dispergierbarkeit, Transparenz und Glanz, nicht im gewünschten Masse zu genügen vermögen. Diese Eigenschaften können auch durch Zusetzen von aminischen Dispergatoren nicht in befriedigender Weise verbessert werden.

Es wurde nun gefunden, dass eine Beschichtung der Pigmentteilchen mit einem Ca-, Mg-, Al-, Zn-, Zr- und/oder Ti-Phosphatkomplex zuzüglich eines Amins oder Ammoniumsalzes die Eigenschaften der Pigmente in überraschend höherem Masse verbessert, insbesondere bezüglich Glanz, Dispersionsbeständigkeit, Wärmebeständigkeit und rheologischen Verhaltens.

Die vorliegende Erfindung betrifft demnach eine Pigmentzusammensetzung enthaltend ein organisches Pigment dessen Teilchenoberfläche mit einer haftenden Überzugsschicht versehen ist, dadurch gekennzeichnet, dass die Überzugsschicht

(a) einen Metallphosphatkomplex, in dem das Metall aus der Gruppe Zink, Zirkonium, Titan und Mischungen davon ausgewählt wird, in einer Menge von 0,5 bis 100 Gew.%, bevorzugt bis 20 Gew.%, besonders bevorzugt von 1 bis 10 Gew.%, bezogen auf das Pigment;
und

(b) mindestens ein Amin der Formel (I) oder ein Ammoniumsalz der Formel (II),

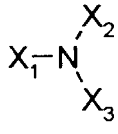 (I)

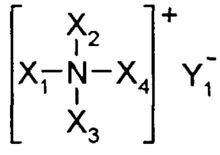 (II)

worin

$X_1$, $X_2$, $X_3$ und gegebenenfalls $X_4$ unabhängig voneinander einen beliebig substituierten Kohlenstoffrest oder Wasserstoff,

jedoch $X_1$, $X_2$ und $X_3$ nicht gleichzeitig Wasserstoff,
und falls $X_1$ und $X_2$ unabhängig voneinander Wasserstoff, Methyl oder Ethyl sind,
$X_3$ nicht

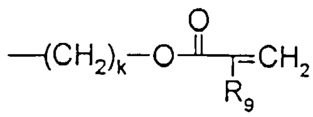

oder ein Polymerisat oder Copolymerisat davon,
worin k eine Zahl von 1 bis 6 und $R_9$ Wasserstoff oder Methyl sind,

und $Y_1$ das Anion einer anorganischen oder organischen Säure bedeuten, in einer Menge von 0,5 bis 15 Gew.%, bevorzugt bis 10 Gew.%, besonders bevorzugt bis 5 Gew.%, bezogen auf das Pigment enthält.

Ausserdem betrifft die vorliegende Erfindung Pigmentzusammensetzung enthaltend ein organisches Pigment aus der Diketopyrrolopyrrolreihe, dessen Teilchenoberfläche mit einer haftenden Überzugsschicht versehen ist, dadurch gekennzeichnet, dass die Überzugsschicht

(a) einen Metallphosphatkomplex, in dem das Metall aus der Gruppe Calcium, Magnesium, Aluminium, Zink, Zirkonium, Titan und Mischungen davon ausgewählt wird, in einer Menge von 0,5 bis 100 Gew.%, bevorzugt bis 20 Gew.%, besonders bevorzugt von 1 bis 10 Gew.%, bezogen auf das Pigment;
und
(b) mindestens ein Amin der Formel (I) oder ein Ammoniumsalz der Formel (II),

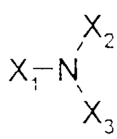 (I) 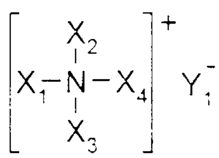 (II)

worin

$X_1$, $X_2$, $X_3$ und gegebenenfalls $X_4$ unabhängig voneinander einen beliebig substituierten Kohlenstoffrest oder Wasserstoff,

jedoch $X_1$, $X_2$ und $X_3$ nicht gleichzeitig Wasserstoff,
und falls $X_1$ und $X_2$ unabhängig voneinander Wasserstoff, Methyl oder Ethyl sind,
$X_3$ nicht

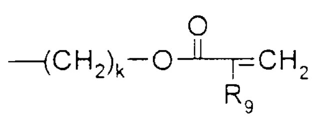

oder ein Polymerisat oder Copolymerisat davon,
worin k eine Zahl von 1 bis 6 und $R_9$ Wasserstoff oder Methyl sind,

und $Y_1$ das Anion einer anorganischen oder organischen Säure bedeuten, in einer Menge von 0,5 bis 15 Gew.%, bevorzugt bis 10 Gew.%, besonders bevorzugt bis 5 Gew.%, bezogen auf das Pigment;

enthält.

Die zweckmässigste Gewichtsmenge des Überzuges hängt insbesondere von der spezifischen Oberfläche des zu überziehenden Pigments ab.

Falls das Metall Calcium, Magnesium und/oder Zink ist, liegt das Molverhältnis zwischen Metall und Phosphor vorzugsweise zwischen 0,50 und 1,50, insbesondere zwischen 0,90 und 1,10. Falls das Metall Aluminium ist, liegt das Molverhältnis zwischen Metall und Phosphor vorzugsweise zwischen 0,20 und 1,00, insbesondere zwischen 0,50 und 0,80. Falls das Metall Zirkonium und/oder Titan ist, liegt das Molverhältnis zwischen Metall und Phosphor vorzugsweise zwischen 0,25 und 0,75, insbesondere zwischen 0,45 und 0,55.

Als Metall im Metallphosphatkomplex sind Zink, Zirkonium, Titan oder eine Mischung davon besonders bevorzugt.

Anorganische oder organische Säuren, deren Anion für die Ammoniumsalze der Formel (II) in Frage kommen, sind beispielsweise Salzsäure, Bromwasserstoffsäure, Iodwasserstoffsäure, Schwefelsäure, Amidoschwefelsäure, Phosphorsäure, Natriumdihydrogenphosphat, Methylphosphonsäure, Borsäure, Tetrafluoroborsäure, Ameisensäure, Essigsäure, Propionsäure, Benzoesäure, Phenylessigsäure, Oxalsäure, Malonsäure, Bernsteinsäure, Phthalsäure, Terephthalsäure, Zitronensäure, Methylsulfonsäure, Ethylsulfonsäure, Benzolsulfonsäure oder Toluolsulfonsäure.

Bevorzugt sind solche Amine der Formel (I) und Ammoniumsalze der Formel (II), worin

$X_1$,$X_2$ unabhängig voneinander -H oder $-CH_2-R_1$, oder $X_1$ und $X_2$ zusammen $-A_1-N{=}C(R_2)-$,

$X_3$ $-CH_2-R_1$,

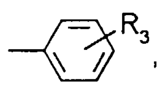
,

$-A_2-NX_6X_7$ oder $-A_2-[NX_5X_6X_7]^+[Y_1]^-$,

$X_4$,$X_5$ -H, $-CH_3$, $-CH_2-CH_3$,

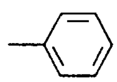
oder
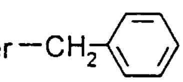
,

$X_6$,$X_7$ unabhängig von $X_1$ bis $X_3$-H oder $-CH_2-R_1$,
oder $X_6$ und $X_7$ zusammen $-A_1-N{=}C(R_2)-$,
oder $X_6$-H oder $-CH_2-R_1$ und $X_7$-$(-A_2-NX_6-)_m-A_2-NX_8X_9$ oder
$-(-A_2-[NX_5X_6]^+[Y_1]^--)_m-A_2-[NX_5X_8X_9]^+[Y_2]^-$,

$X_8$,$X_9$ unabhängig voneinander -H oder $-CH_2-R_1$,
oder $X_8$ und $X_9$ zusammen $-A_1-N{=}C(R_2)-$,

$Y_1$,$Y_2$ unabhängig voneinander $Cl^-$, $Br^-$, $I^-$, $HSO_4^-$, $HPO_4^{2-}$, $HCOO^-$ und $H_3CCOO^-$,

$R_1$ -H, $-C_1-C_{27}$-Alkyl, $-A_3-R_4$,

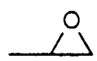
,

$-A_3-A_5-R_5$, -COOM, $-A_3$-COOM,
$-A_3-N(R_6)-A_4-NR_7R_8$, $-A_3-O-R_2$, $-A_3-NHCO-R_2$, $-NHCO-R_2$,
$-A_3-(-Si(CH_3)_2-O-)_n-Si(CH_3)_2-A_3-NH_2$ oder $-A_3-SO_2-(CF_2)_p-F$,
sowie $-CH{=}CH_2$, $-A_3-CH{=}CH_2$,$-A_3-OCO-C(R_9){=}CH_2$ oder ein Polymerisat oder Copolymerisat davon,
jedoch nicht $-(CH_2)_k-OCO-C(R_9){=}CH_2$ oder ein Polymerisat oder
Copolymerisat davon, falls $X_1$ und $X_2$ unabhängig voneinander-H, $-CH_3$ oder $-CH_2-CH_3$ sind und k eine Zahl von 0 bis 5 ist,

$R_2$ $-C_1-C_{20}$-Alkyl,

$R_3$ $-NR_7R_8$, -COOM, $-COO-R_2$,

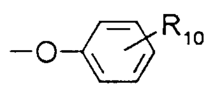, 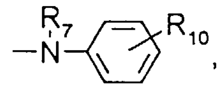,

$-NX_6X_7$ oder
$-[NX_5X_6X_7]^+[Y_2]^-$,

$R_4$ — $-OR_6$, $-NR_7R_8$,

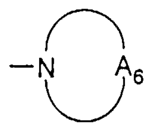

oder $-N(-A_7-R_5)-A_8-R_{11}$,

$R_5$,$R_{11}$ — unabhängig voneinander $-OR_6$ oder $-NR_7R_8$,
$R_6$,$R_7$,$R_8$ — unabhängig voneinander -H, $-CH_3$ oder $-C_2H_5$,
$R_9$ — -H oder $-CH_3$.
$R_{10}$ — -H, $-OR_6$ oder $-NR_7R_8$,
$A_1$ — $-C_2$-$C_4$-Alkylen,
$A_2$ — $-C_2$-$C_{10}$-Alkylen, $-A_4$-NHCONH-$A_4$-$NR_7$-$A_1$-O-$A_1$- oder $-A_4$-NHCO-$A_3$-CONH-$A_4$-$NR_7$-$A_1$-O-$A_1$-,
$A_3$ — $-C_1$-$C_{10}$-Alkylen,
$A_4$ — $-C_2$-$C_{10}$-Alkylen,
$A_5$ — eine Kette aus q sich wiederholenden Einheiten -O-$A_1$-, wobei jeder $A_1$ in einer beliebigen sich wiederholenden Einheit von $A_1$ in den anderen sich wiederholenden Einheiten unabhängig ist,
$A_6$ — $-A_1$-O-$A_1$-, $-A_1$-$NR_6$-$A_1$- oder $-A_9$-,
$A_7$ — eine Kette aus r sich wiederholenden Einheiten -O-$A_1$-, wobei jeder $A_1$ in einer beliebigen sich wiederholenden Einheit von $A_1$ in den anderen sich wiederholenden Einheiten unabhängig ist,
$A_8$ — $-A_7$- oder eine direkte Bindung,
$A_9$ — $-C_4$-$C_7$-Alkylen,
M — -H, -K, -Li oder -Na,
m — eine Zahl von 1 bis 3000,
n — eine Zahl von 20 bis 200,
p — eine Zahl von 1 bis 20,
q — eine Zahl von 1 bis 50 und
r — eine Zahl von 1 bis 20 bedeuten.

Unter $C_i$-$C_j$-Alkyl werden lineare oder verzweigte Alkylsubstituenten bestehend aus i bis j Kohlenstoffatomen verstanden. Beispiele von $C_1$-$C_5$-Alkyl sind Methyl, Ethyl, Propyl, Isopropyl, n-Butyl, sec-Butyl, tert-Butyl, n-Amyl, sec-Amyl oder Neopentyl. Beispiele von $C_6$-$C_{18}$-Alkyl sind n-Hexyl, Trimethylpropyl, sec-Hexyl, Neohexyl, n-Heptyl, Isoheptyl, Octyl, 2-Ethylhexyl, 2,4,4-Trimethylpentyl, Nonyl, Decyl, Dodecyl, Tetradecyl, Hexadecyl oder Octadecyl. Beispiele von $C_{19}$-$C_{20}$-Alkyl sind n-Nonadecyl, 4-Nonadecyl, n-Eicosyl, 3-Eicosyl oder 7-Eicosyl. Beispiel von $C_{21}$-Alkyl ist n-Heneicosyl. Beispiele von $C_{22}$-$C_{27}$-Alkyl sind n-Docosyl, n-Tetracosyl, n-Hexacosyl oder n-Heptacosyl.

Unter $C_i$-$C_j$-Alkylen werden lineare oder verzweigte Alkylensubstituenten bestehend aus i bis j Kohlenstoffatomen verstanden. $C_1$-Alkylen ist Methylen. Beispiele von $C_2$-$C_4$-Alkylen sind Ethylen, 1,2-Propylen, 1,3-Propylen, 1,2-Butylen oder 2,3-Butylen. Beispiele von $C_5$-Alkylen sind 1,2-Amylen, 1,4-Amylen oder 1,3-(2,2-Dimethyl)-propylen. Beispiele von $C_6$-$C_7$-Alkylen sind 1,2-Hexylen, 1,2-(3,3-Dimethyl)-butylen oder 1,7-Heptylen. Beispiele von $C_8$-$C_{10}$-Alkylen sind Octylen oder Decylen. Beispiele von $C_{11}$-$C_{20}$-Alkylen sind Hendecylen, Dodecylen, Tetradecylen, Hexadecylen oder Eicosylen.

Unter den Aminen der Formel (I) und Ammoniumsalzen der Formel (II) sind viele kommerziell erhältlich, beispielsweise als Dispergatoren, deren Strukturen und/oder, falls es sich um Gemische handelt, Zusammensetzungen von den Herstellern oft nicht genau angegeben werden. Beispiele sind 1,6-Diaminohexan, 6-Amino-hexanol, 8-Amino-3,6-dioxa-octanol, 3-Dimethylamino-propylamin, 3-Diethylamino-propylamin, Hexadecyl-trimethyl-ammoniumbromid, Octadecyl-trimethyl-ammoniumbromid, 2-Methyl-2-dodecyl-amin (PRIMENE® 81R, Rohm & Haas), N-Coco-1,3-diaminopropan (DUOMEEN® C, Akzo), Talg-bis-2-hydroxyethylamin (ETHOMEEN® HT/12, Akzo), Polyoxypropylendiamin (JEFFAMINE® D400, Texaco), Polyethylenimin (beispielsweise mit $M_w$ ~50'000-60'000 als 50%ige wässrige Lösung, Aldrich), O-2-Aminopropyl-O'-2-methoxy-methyl-polypropylenglykole (beispielsweise mit $M_w \sim 600$), O,O'-Bis (2-aminopropyl)-polypropylenglykole (beispielsweise mit $M_w \sim 900$), quatemäre Polyamine (beispielsweise GAFQUAT® 734, GAF), ethoxylierte Amine (beispielsweise SYMPERONIC® T-904 oder SYMPERONIC® T-908, ICI), Polyamine (beispielsweise INIPOL® PS, CECA), polypropoxylierte quaternäre Ammoniumsalze (beispielsweise EMCOL® CC9, Witco).

Unter den bevorzugten Aminen der Formel (I) und Ammoniumsalzen der Formel (II) besonders bevorzugt sind solche Amine und Ammoniumsalze, bei welchen zusätzlich eine oder bevorzugt gleichzeitig mehrere der folgenden Bedingungen zutreffen:

$R_1$ ist -H, $-C_1-C_{27}$-Alkyl, $-A_3-R_4$,

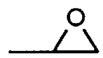 ,

$-A_3-A_5-R_5$, -COOM,
$-A_{10}$-COOM, $-A_3-NH-A_4-NR_9R_{12}$, $-A_3-O-R_2$, $-A_{10}-NHCO-R_2$,
$-NHCO-R_2$, $-A_1-(-Si(CH_3)_2-O-)_n-Si(CH_3)_2-A_1-NH_2$ oder
$-A_3-SO_2-(CF_2)_p-F$, sowie $-CH=CH_2$,$-A_3-CH=CH_2$,
$-A_3-OCO-C(R_9)=CH_2$ oder ein Polymerisat oder Copolymerisat davon, jedoch nicht $-(CH_2)_k-OCO-C(R_9)=CH_2$ oder ein Polymerisat oder Copolymerisat davon, falls $X_1$ und $X_2$ unabhängig voneinander-H, $-CH_3$ oder $-CH_2CH_3$ sind und k eine Zahl von 0 bis 5 ist,

$R_3$ ist $-N(CH_3)_2$, -COOH, $-COO-R_2$,

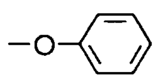 , 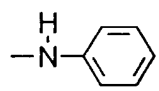 ,

$-NX_6X_7$ oder
$-[NX_5X_6X_7]^+[Y_2]^-$,

$R_6,R_7,R_8$ sind unabhängig voneinander-H oder $-CH_3$,
$R_9,R_{12}$ sind unabhängig voneinander-H oder $-CH_3$, insbesondere -H,
$A_1$ ist $-CH_2-CH_2-$ oder $-CH_2-CH(CH_3)-$, insbesondere $-CH_2-CH_2-$,
$A_6$ ist $-CH_2-CH_2-O-CH_2-CH_2-$, $-CH_2-CH_2-NH-CH_2-CH_2-$ oder $-(CH_2)_4-$,
$A_8$ ist $-A_7-$ oder eine direkte Bindung, wobei in $A_7$ und $A_8$ zusammen von 3 bis 10 sich wiederholenden Einheiten $-O-A_1-$ vorhanden sind,
$A_{10}$ ist $-C_1-C_5$-Alkylen,
p ist die Zahl 8 und
r ist eine Zahl von 1 bis 10.

Ganz besonders bevorzugt sind solche Amine der Formel (I) und Ammoniumsalze der Formel (II), worin

$X_1,X_2$ unabhängig voneinander-H oder $-CH_2-R_1$,
$X_3$ $-CH_2-R_{13}$, $-A_{10}-NHX_7$ oder $-A_{10}-[NHX_5X_7]^+[Y_1]^-$,
$X_4,X_5$ -H, $-CH_3$, $-C_2H_5$,

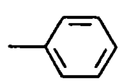 oder 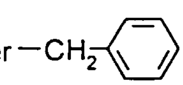 ,

$X_7$ unabhängig von $X_1$ bis $X_3$ -H, $-CH_2-R_1$, $-(-A_2-NH-)_m-A_2-NX_8X_9$ oder $-(-A_2-[NHX_5]^+[Y_1]^- -)_m-A_2-[NX_5X_8X_9]^+[Y_2]^-$,
$X_8,X_9$ unabhängig voneinander-H oder $-CH_2-R_1$,
$Y_1,Y_2$ $Cl^-$, $Br^-$, $I^-$, $HSO_4^-$, $HPO_4^{2-}$, $HCOO^-$ und $H_3CCOO^-$,
$R_1$ -H, $-CH_3$, $-(CH_2)_s-CH_3$, $-A_{11}-NH_2$,

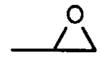 ,

| | |
|---|---|
| | $-A_{11}-A_5-R_5$, -COOM, |
| | $-A_{13}$-COOM, $-A_{11}-NH-A_{10}-NH_2$, oder $-A_{10}-NHCO-R_2$, |
| $R_2$ | $-C_6-C_{18}$-Alkyl, |
| $R_5$ | $-OR_6$ oder $-NHR_7$, |
| $R_6,R_7,R_8$ | unabhängig voneinander-H oder $-CH_3$, insbesondere -H, |
| $R_{13}$ | $-C_1-C_{21}$-Alkyl, $-A_3-NR_7R_8$ oder $-A_{14}-A_{12}-R_5$, |
| $A_1$ | $-CH_2-CH_2-$ oder $-CH_2-CH(CH_3)-$, insbesondere $-CH_2-CH_2-$, |
| $A_2$ | $-C_2-C_4$-Alkylen, insbesondere $-CH_2-CH_2-$, |
| $A_3$ | $-C_1-C_{10}$-Alkylen, |
| $A_5$ | eine Kette aus q sich wiederholenden Einheiten $-O-A_1-$, wobei jeder $A_1$ in einer beliebigen sich wiederholenden Einheit von $A_1$ in den anderen sich wiederholenden Einheiten unabhängig ist, |
| $A_6$ | $-A_1-O-A_1-$, - $A_1-NR_6-A_1-$ oder $-A_9-$, |
| $A_{10}$ | $-C_2-C_4$-Alkylen, insbesondere $-CH_2-CH_2-CH_2-$, |
| $A_{11}$ | $-C_1-C_5$-Alkylen, insbesondere $-CH_2-$, |
| $A_{12}$ | eine Kette aus t sich wiederholenden Einheiten $-O-A_1-$, wobei jeder $A_1$ in einer beliebigen sich wiederholenden Einheit von $A_1$ in den anderen sich wiederholenden Einheiten unabhängig ist, |
| $A_{13}$ | $-C_1-C_4$-Alkylen, |
| $A_{14}$ | $-C_1-C_5$-Alkylen, insbesondere $-CH_2-CH_2-CH_2-$, |
| M | -H, -K, -Li oder -Na, |
| m | eine Zahl von 1 bis 2000, |
| q | eine Zahl von 2 bis 5, insbesondere 2 oder 5, |
| s | eine Zahl 6, 8, 10, 12, 14, 16 oder 18 und |
| t | eine Zahl von 10 bis 30, insbesondere 10, 15, 20, 25 oder 30 bedeuten, |

insbesondere Polyethylenimin von $M_w$ 1'000 bis $M_w$ 70'000.

Mit Vorteil werden bevorzugte Metallphosphatkomplexe mit bevorzugten Aminen oder Ammoniumsalzen kombiniert. Ausserordentlich vorteilhafte Eigenschaften besitzen solche Pigmentzusammensetzungen, worin als Metall im Metallphosphatkomplex Zink, Zirkonium, Titan oder eine Mischung davon, und als Amin oder Ammoniumsalz der Formeln (I) oder (II) Polyethylenimin von $M_w$ 1'000 bis $M_w$ 70'000 verwendet werden.

Im Vergleich mit der einfachen Kombination eines organischen Pigments mit einem aminischen Dispergator weist die vorliegende Erfindung den Vorteil auf, dass die Amine ihren Zweck viel besser erfüllen. Für ein bestimmtes organisches Pigment erlaubt dies je nach Problemlage, bessere applikatorische Eigenschaften zu erreichen, die Menge des aminischen Dispergators zu erniedrigen oder auf eine viel breitere Palette verwendbarer Amine, beispielsweise billige grosstechnisch hergestellte Amine, zurückzugreifen.

Die Wahl des Amins richtet sich nach der vorgesehenen Applikation der erfindungsgemässen Pigmentkomposition; welche Aminklassen für welche Applikationen geeignet sind, ist dem Fachmann geläufig. Beispielsweise sind in Polyolefinen Alkylamine besonders gut geeignet, in Polyethylen bevorzugt solche, worin $X_3$ $-CH_2-C_7-C_{27}$-Alkyl und $X_1$ und $X_2$ -H sind. Insbesondere ist Polyethylenimin von $M_w$ 2'000 bis $M_w$ 70'000 in Lacksystemen vorzüglich, vorzugsweise in Einbrennlacken.

Alle üblichen organischen Pigmente, wie beispielsweise Chinophthalone, Indanthrone, Flavanthrone, Pyranthrone, Dioxazine, Perinone, Thioindigo, Metallkomplexe und insbesondere Diketopyrrolopyrrole, Chinacridone, Perylene, Anthrachinone, Phthalocyanine, Azopigmente, Isoindoline und Isoindolinone, eignen sich zur Herstellung der erfindungsgemässen Pigmentzusammensetzungen. Bevorzugt werden die Chinacridone und Azopigmente, sowie insbesondere die Diketopyrrolopyrrole.

Die Erfindung betrifft auch ein Verfahren zur Herstellung von erfindungsgemässen Pigmentzusammensetzungen, dadurch gekennzeichnet, dass man

(a') ein mit 0,5 bis 100 Gew.%, bezogen auf das Pigment, eines mit einem entsprechenden Metallphosphatkomplex überzogenen organischen Pigments, mit

(b') 0,5 bis 15 Gew.%, bevorzugt bis 10 Gew.%, besonders bevorzugt bis 5 Gew.%, eines entsprechenden Amins oder Ammoniumsalzes, bezogen auf das Pigment,

behandelt.

Diese Behandlung kann nach üblichen Methoden, zum Beispiel durch Aufschlämmung des mit Metallphosphat überzogenen Pigments und Zugabe der gewünschten Menge Amin oder Ammoniumsalz unter Rühren, erfolgen. Die Anwesenheit eines Verdünnungsmittels ist vorteilhaft, jedoch keine absolute Notwendigkeit. Zweckmässig ist die Verwendung eines inerten Verdünnungsmittels, in welchem das Amin sich zumindest teilweise löst. Bevorzugte Verdünnungsmittel sind Wasser oder Niederalkylalkohole, beispielsweise Methyl-, Ethyl-, n-Propyl-, Isopropyl-, n-Butyl-, sec.-Butyl-, tert.-Butyl oder Amylalkohol, besonders bevorzugt ist Wasser.

Das Gemisch wird zweckmässig 15 Minuten bis 2 Stunden bei Temperaturen zwischen 20 und 80°C, bevorzugt bei Zimmertemperatur, gerührt.

Mit Metallphosphat überzogene Pigmente, die als Ausgangsmaterial (a') für dieses Verfahren geeignet sind, können beispielsweise erhalten werden, indem das Pigment mit einem Ca-, Mg-, Al-, Zn-, Zr- und/oder Ti-Salz oder -Chelatkomplex in Wasser oder Niederalkylalkohol oder einem Gemisch davon nach üblichen Methoden dispergiert, und dann eine wässrige Lösung der die Phosphationen liefernden Verbindung unter Rühren zugegeben wird.

Bei dieser Methode werden zweckmässig solche Mengen gewählt, dass 0,5 bis 100 Gew.% Metallphosphatkomplex, bevorzugt bis 20%, besonders bevorzugt von 1 bis 10%, bezogen auf das Pigment, bei einem bevorzugten Molverhältnis von Metall zu Phosphor zwischen 0,25 und 0,75, entsteht.

Eine weitere Methode zur Herstellung von mit Metallphosphat überzogenen Pigmente, die als Ausgangsmaterial (a') für dieses Verfahren geeignet sind, besteht darin, dass man das Pigment zuerst mit der die Phosphationen liefernden Verbindung dispergiert und dann eine wässrige Lösung des Metallsalzes oder -Chelatkomplexes zugibt, wobei sich das Ca-, Mg-, Al-, Zn-, Zr- und/oder Ti-Phosphatkomplex in situ auf der Teilchenoberfläche des Pigments bildet.

Vorzugsweise wird zuerst das Pigment mit dem Metallsalz oder -chelatkomplex dispergiert und dann die Lösung der die Phosphationen liefernden Verbindung zugegeben.

In beiden Fällen wird dann das Gemisch zweckmässig 15 Minuten bis 2 Stunden bei Temperaturen zwischen 20 und 80°C, bevorzugt bei Zimmertemperatur, gerührt.

Geeignete Ca-, Mg-, Al- beziehungsweise Zn-Salze sind zum Beispiel deren Chloride, Bromide, Carbonate, Nitrate oder Sulfate wie Calciumchlorid, Calciumbromid, Calciumnitrat, Magnesiumchlorid, Magnesiumcarbonat, Magnesiumsulfat, Aluminiumnitrat, Aluminiumsulfat, Zinkchlorid oder Zinksulfat. Geeignete Ca-, Mg-, Al- beziehungsweise Zn-Komplexe sind zum Beispiel deren Acetate, Citrate oder Acetylacetonate wie Calciumacetat, Tricalciumdicitrat, Magnesiumacetat, Trimagnesiumdicitrat, Aluminiumacetat, Aluminiumacetylacetonat, Zinkacetat oder Zinkacetylacetonat.

Vorzugsweise wird als Ca-, Mg-, Al- oder Zn-Salz oder -Komplex Calciumchlorid, Calciumacetat, Tricalciumdicitrat, Magnesiumchlorid, Magnesiumacetat, Trimagnesiumdicitrat, Aluminiumsulfat, Aluminiumacetylacetonat, Zinksulfat, Zinkacetat oder Zinkacetylacetonat verwendet.

Geeignete Zr- beziehungsweise Ti-Salze oder Komplexe sind zum Beispiel Zirkoniumsulfat, Zirkoniumammoniumcarbonat, Zirkoniumacetat, Zirkoniumpropionat, Zirkonylchlorid, Titan(IV)chlorid oder Titanylsulfat und insbesondere die Chelate der Formeln

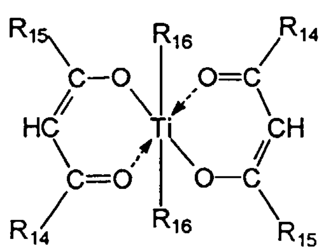 (III), 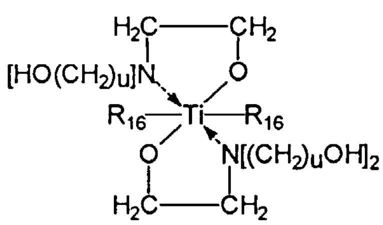 (IV) oder 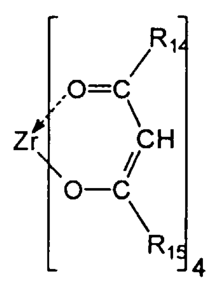 (V),

worin u eine Zahl von 1 bis 3, $R_{14}$ Methyl, Ethyl, Methoxy oder Ethoxy, $R_{15}$ Methyl oder Ethyl und $R_{13}$ Halogen oder $C_1$-$C_4$-Alkoxy bedeuten, sowie Mischungen davon.

Halogen bedeutet zum Beispiel Brom, Iod und insbesondere Chlor. $C_1$-$C_4$-Alkoxy bedeutet beispielsweise Methoxy, Ethoxy, n-Propoxy, Isopropoxy, n-Butoxy, sec.-Butoxy oder tert.-Butoxy.

Vorzugsweise wird als Zr- oder Ti-Salz eines der Chelate der Formeln (III), (IV) oder (V) verwendet, worin $R_{14}$ bevorzugt Methyl oder Ethoxy, $R_{15}$ vorzugsweise Methyl, u bevorzugt 2 und $R_{16}$ bevorzugt $C_1$-$C_4$-Alkoxy, insbesondere Isopropoxy bedeuten.

Besonders bevorzugte Zr- und Ti-Salze sind Zirkonium- und Titanacetylacetonat sowie Titan(IV)triethanolaminat.

Geeignete Niederalkylalkohole sind zum Beispiel Methyl-, Ethyl-, n-Propyl-, Isopropyl-, n-Butyl-, sec.-Butyl-,

tert.-Butyl- oder Amylalkohol. Die Dispersion erfolgt aber vorzugsweise in Wasser, ohne einen Alkohol.

Die Phosphationen werden bevorzugt in Form von Ortho-, Meta- oder Pyrophosphorsäure oder ihrer Salze, insbesondere ihrer Alkalisalze, zugegeben.

Besonders geeignet sind zum Beispiel Orthophosphorsäure, Orthophosphate, wie $MH_2PO_4$, $M_2HPO_4$ oder $M_3PO_4$, Metaphosphorsäure, Knorre Salz $[(NaPO_3)_3 \cdot 6H_2O]$, Grahamsches Salz $[(NaPO_3)_6]$, Calgon $[(NaPO_3)_{12-13} \cdot Na_2O]$, $M_2H_2P_2O_7$ und $M_4P_2O_7$, wobei M Na, K oder $NH_4$ bedeutet. Bevorzugt werden Orthophosphate, insbesondere $Na_2HPO_4$ oder $Na_3PO_4$.

Bevorzugt sind die gleichen Metalle sowie Amine oder Ammoniumsalze, die auch als Komponente der erfindungsgemässen Pigmentzusammensetzungen bevorzugt sind.

Die erfindungsgemässen Pigmentzusammensetzungen können auch aus anderen erfindungsgemässen Pigmentzusammensetzungen hergestellt werden, indem ein Amin oder Ammoniumsalz durch ein anderes Amin oder Ammoniumsalz ausgetauscht wird.

Gegenstand der Erfindung ist daher auch ein weiteres Verfahren zur Herstellung von erfindungsgemässen Pigmentzusammensetzungen, dadurch gekennzeichnet, dass man ein mit einem haftenden Überzug aus einem Metallphosphatkomplex und einem Amin oder Ammoniumsalz überzogenes organisches Pigment mit einem Amin der Formel (I) oder mit einem Ammoniumsalz der Formel (II) behandelt.

Bei diesem Verfahren bevorzugt werden die gleichen Amine oder Ammoniumsalze, die auch als Komponente der erfindungsgemässen Pigmentzusammensetzungen bevorzugt sind. Besonders bevorzugt ist der Austausch eines Amins oder Ammoniumsalzes durch ein am Stickstoff weniger sterisch gehindertes Amin oder Ammoniumsalz.

Die erfindungsgemässen Pigmentzusammensetzungen können aber auch ohne Isolierung einer Zwischenstufe durch gestaffelte oder gleichzeitige Zugabe der dazu notwendigen Edukte hergestellt werden.

Gegenstand der Erfindung ist daher auch ein weiteres, bevorzugtes Verfahren zur Herstellung von erfindungsgemässen Pigmentzusammensetzungen, dadurch gekennzeichnet, dass man ein organisches Pigment gleichzeitig oder in beliebiger Reihenfolge mit

(a") einem entsprechenden Ca-, Mg-, Al-, Zn-, Zr- und/oder Ti-Salze oder -Chelatkomplex,
(b") einer Phosphationen liefernden Verbindung, und
(c") einem entsprechenden Amin oder Ammoniumsalz

behandelt.

Dabei können die Komponenten (a"), (b") und (c") gleichzeitig oder in beliebiger Reihenfolge nacheinander zugesetzt werden; bevorzugt sind die Reihenfolgen (a")-(b")-(c") und (b")-(a")-(c"), insbesondere (a")-(b")-(c").

Die für dieses Verfahren geeigneten Ca-, Mg-, Al-, Zn-, Zr- und/oder Ti-Salz oder -Chelatkomplexe, Phosphationen liefernden Verbindungen, Amine, Verdünnungsmittel und Reaktionsbedingungen sind die gleichen, wie zuvor für das Verfahren zum Aufbringen eines haftenden Überzuges aus einem Metallphosphatkomplex und einem Amin auf einer Pigmentoberfläche ausgehend von einem mit Metallphosphat überzogenen Pigment (a') und einem Amin (b'), beziehungsweise bei der Herstellung der mit Metallphosphatkomplexe überzogenen organischen Pigmente (a'), angegeben.

Die erfindungsgemässen Pigmentzusammensetzungen eignen sich sehr gut zum Pigmentieren von hochmolekularen organischen Materialien, insbesondere in Form von Lacken und Druckfarben. Hochmolekulare organische Materialien, die mit den erfindungsgemässen Stoffzusammensetzungen gefärbt beziehungsweise pigmentiert werden können, sind zum Beispiel Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin/Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie zum Beispiel Leinölfimis, Nitrocellulose, Alkydharze, Phenolharze, Melaminharze, Acrylharze und Hamstoff/Formaldehydharze.

Je nach Verwendungszweck erweist es sich als vorteilhaft, die erfindungsgemässen Pigmentzusammensetzungen als Toner oder in Form von Präparaten einzusetzen. Bezogen auf das zu pigmentierende hochmolekulare organische Material kann man die erfindungsgemässen Pigmentzusammensetzungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung

von nicht starren Formlingen oder zur Verringerung ihrer Sprödigkeit den hochmolekularen Verbindungen vor der Verformung sogenannte Weichmacher einzuverleiben. Als solche können zum Beispiel Ester der Phosphorsäure, Phthalsäure oder Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe beziehungsweise andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert beziehungsweise gelöst. Man kann dabei auch so verfahren, dass man die einzelnen Komponenten für sich oder auch mehrere gemeinsam dispergiert beziehungsweise löst, und erst hierauf alle Komponenten zusammenbringt.

Die erhaltenen Färbungen zeichnen sich durch gute allgemeine Eigenschaften, wie zum Beispiel hohe Transparenz, gute Überlackier-, Migrations-, Hitze-, Licht- und Wetterbeständigkeit, aus.

Die erfindungsgemässen Pigmentzusammensetzungen zeichnen sich aber ganz besonders durch ein hervorragendes rheologisches Verhalten, sehr gute Dispergierbarkeit und hohe Dispersionsbeständigkeit in Lack- und Druckfarbensystemen sowie durch hohen Glanz und ausgezeichnetes "DOI" (=distinctness of image) der damit erhaltenen Lackierungen. In Industrielacken weisen die erfindungsgemässen Produkte eine ausgezeichnete Wärmebeständigkeit auf.

Infolge der guten rheologischen Eigenschaften der erfindungsgemässen Pigmentzusammensetzungen ist es möglich, Lacke hoher Pigmentkonzentration (high loadings) herzustellen.

In Kunststoffen zeichnen sich die erfindungsgemässen Produkte ebenfalls durch gute Dispergierbarkeit aus.

Die erfindungsgemässen Pigmentzusammensetzungen eignen sich vorzüglich zum Färben von wässrigen und/oder lösungsmittelhaltigen Lacken, insbesondere Automobillacken, beispielsweise Acryl/Melamin-, Alkyd/Melamin-, thermoplastische Acryl-, einbrennbare Acryl- oder wässrige Automobillack-Systeme. Ebenfalls vorzüglich eignen sie sich für Metalleffektlackierungen, beispielsweise solche, welche Aluminium- oder Glimmer-Partikel enthalten.

Die nachfolgenden Beispiele dienen zur Erläuterung der Erfindung. Sofern nichts anderes vermerkt, bedeuten Prozente Gewichtsprozente.

Beispiel 1: 55,0 g 1,4-Diketo-2,5-dihydro-3,6-diphenyl-pyrrolo[3,4-c]pyrrol der Formel

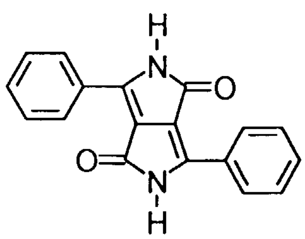

(VI)

werden mit 11,4 g Zirkonium(IV)acetylacetonat in 500 ml Wasser dispergiert. Dieser Suspension wird mittels einer Pumpe innert 105 Minuten unter Rühren eine Lösung von 16,7 g $Na_2HPO_4 \cdot 12H_2O$ in 100 ml Wasser zugefügt. Danach wird die Suspension filtriert und der Rückstand wird mit Wasser gewaschen.

Beispiele 2-11: 5,6 g eines 53,0%igen Presskuchens des gemäss Beispiel 1 erhaltenen Produkts werden in 150 ml Wasser dispergiert. Dann wird dieser Pigmentdispersion eine Aufschlämmung der unten angegebenen Menge Amin in 40 ml Wasser zugefügt. Die Suspension wird 2 Stunden bei 60°C gerührt und filtriert; der Rückstand wird mit Wasser gewaschen, bei 80°C getrocknet und pulverisiert.

| Beispiel | Menge | Amin | Handelsname |
|---|---|---|---|
| 2 | 0,7 g | N-Talg-1,3-diaminopropan | DUOMEEN® T (Akzo) |
| 3 | 1,0 g | N-Coco-1,3-diaminopropan | DUOMEEN® C (Akzo) |
| 4 | 0,7 g | Talg-bis-2-hydroxyethylamin | ETHOMEEN® HT/12 (Akzo) |
| 5 | 0,45 g | 2-Methyl-2-dodecyl-amin | PRIMENE® 81R (Rohm & Hass) |
| 6 | 0,7 g | O-2-Aminopropyl-O'-2-methoxy-methyl-polypropylenglykol [$M_w$ ~600] | |

(fortgesetzt)

| Beispiel | Menge | Amin | Handelsname |
|---|---|---|---|
| 7 | 0,7 g | O,O'-Bis(2-aminopropyl)-polypropylenglykol [$M_w$ ~900] | |
| 8 | 0,8 g | Octadecyl-trimethyl-ammoniumbromid | |
| 9 | 0,3 g | 8-Amino-3,6-dioxa-octanol | |
| 10 | 0,23 g | 3-Dimethylamino-propylamin | |
| 11 | 0,7 g | Polyoxypropylendiamin | JEFFAMINE® D400 (Texaco) |

Beispiel 12: 63,5 g eines 31,5%igen Presskuchens 1,4-Diketo-2,5-dihydro-3,6-di(4'-tert.-butyl)-phenyl-pyrrolo [3,4-c]pyrrol der Formel

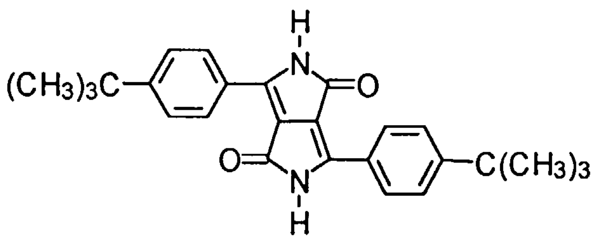

(VII)

(hergestellt zum Beispiel gemäss US 4 579 949) werden mit 4,8 g Zirkonium(IV)acetylacetonat in 132 ml Wasser dispergiert. Dieser Suspension wird mittels einer Pumpe innert 2½ Stunden unter Rühren eine Lösung von 70,5 g $Na_2HPO_4 \cdot 12H_2O$ in 100 ml Wasser zugefügt. Danach wird die Suspension filtriert und der Rückstand wird mit Wasser gewaschen, bei 80°C getrocknet und pulverisiert.

Beispiele 13-15: 3,0 g des gemäss Beispiel 12 erhaltenen Produkts werden in 100 ml Wasser dispergiert. Dann wird dieser Pigmentdispersion eine Aufschlämmung der unten angegebenen Menge Amin in 40 ml Wasser zugefügt. Die Suspension wird 2 Stunden bei 60°C gerührt und filtriert; der Rückstand wird mit Wasser gewaschen, bei 80°C getrocknet und pulverisiert.

| Beispiel | Menge | Amin | Handelsname |
|---|---|---|---|
| 13 | 1,0 g | O-(2-Aminopropyl)-O'-2-methoxy-ethyl-polypropylenglykol [$M_w$ ~600] | |
| 14 | 0,75 g | Polyoxypropylendiamin | JEFFAMINE® D400 (Texaco) |
| 15 | 0,2 g | 3-Dimethylamino-propylamin | |

Beispiel 16: Man verfährt analog wie im Beispiel 1, jedoch ausgehend von 28,8 g 1,4-Diketo-2,5-dihydro-3,6-diphenyl-pyrrolo[3,4-c]pyrrol, 0,5 g Zirkonium(IV)-acetylacetonat und 0,3 g $Na_2HPO_4 \cdot 12H_2O$ in total 300 ml Wasser. Anschliessend wird der Filterkuchen bei 80°C getrocknet und pulverisiert.

Beispiele 17-27: 3,0 g des gemäss Beispiel 16 erhaltenen Produkts werden in 100 ml Wasser dispergiert. Dann wird dieser Pigmentdispersion eine Aufschlämmung der unten angegebenen Menge Amin in 40 ml Wasser zugefügt. Die Suspension wird 2 Stunden bei Raumtemperatur gerührt und filtriert; der Rückstand wird mit Wasser gewaschen, bei 80°C getrocknet und pulverisiert.

| Beispiel | Menge | Amin | Handelsname |
|---|---|---|---|
| 17 | 0,3 g | Polyethylenimin (50% in $H_2O$) | (Aldrich) [$M_w$ ~50'000-60'000] |
| 18 | 0,13 g | 2-Methyl-2-dodecyl-amin | PRIMENE® 81R (Rohm & Hass) |
| 19 | 0,25 g | Hexadecyl-trimethyl-ammoniumbromid | |
| 20 | 0,3 g | Quaternäres Polyamin | GAFQUAT® 734(GAF) |
| 21 | 0,4 g | O-2-Aminopropyl-O'-2-methoxy-ethyl-polypropylenglykol [$M_w$ ~600] | |
| 22 | 0,1 g | Diaminohexan | |
| 23 | 0,15 g | Ethoxyliertes Amin | SYMPERONIC® T-908 (ICI) |

(fortgesetzt)

| Beispiel | Menge | Amin | Handelsname |
|---|---|---|---|
| 24 | 0,15 g | Ethoxyliertes Amin | SYMPERONIC® T-904 (ICI) |
| 25 | 0,1 g | 6-Amino-hexanol | |
| 26 | 0,15 g | Polyamin | INIPOL® PS (CECA) |
| 27 | 0,15 g | Polypropoxyliertes quaternäres Ammoniumsalz | EMCOL® CC9 (Witco) |

Beispiel 28: Man verfährt analog wie im Beispiel 1, jedoch ausgehend von 28,8 g 1,4-Diketo-2,5-dihydro-3,6-diphenyl-pyrrolo[3,4-c]pyrrol, 1,0 g Zirkonium(IV)-acetylacetonat und 0,6 g $Na_2HPO_4 \cdot 12H_2O$ in total 300 ml Wasser. Anschliessend wird der Filterkuchen bei 80°C getrocknet und pulverisiert.

Beispiele 29-39: Man verfährt analog wie in den Beispielen 17-27, jedoch verwendet man jeweils die doppelte Menge Amin, als bei den Beispielen 17-27 angegeben.

Beispiel 40: 27,2 g eines 36,8%igen Presskuchens 1,4-Diketo-2,5-dihydro-3,6-diphenylpyrrolo[3,4-c]pyrrol der Formel

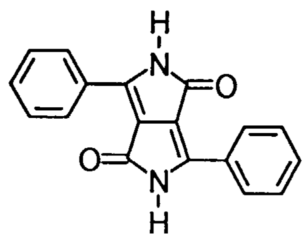

(VI)

werden mit 0,8 g Aluminium(III)acetylacetonat in 70 ml Wasser dispergiert. Dieser Suspension wird mittels einer Pumpe innert 105 Minuten unter Rühren eine Lösung von 1,76 g $Na_2HPO_4 \cdot 12H_2O$ in 20 ml Wasser zugefügt. Danach wird die Suspension filtriert und der Rückstand wird mit Wasser gewaschen, bei 80°C getrocknet und pulverisiert.

Beispiel 41: 2,0 g des gemäss Beispiel 40 erhaltenen Produkts werden in 60 ml Wasser dispergiert. Dann wird dieser Pigmentdispersion eine Aufschlämmung von 0,10 g Polyethylenimin [$M_w \sim 25'000$] in 20 ml Wasser zugefügt. Die Suspension wird 16 Stunden bei 60°C gerührt und filtriert; der Rückstand wird mit Wasser gewaschen, bei 80°C getrocknet und pulverisiert.

Beispiel 42: Man verfährt analog wie im Beispiel 40, jedoch ausgehend von 27,2 g 1,4-Diketo-2,5-dihydro-3,6-diphenyl-pyrrolo[3,4-c]pyrrol Presskuchen, 0,80 g $CaCl_2$ und 2,60 g $Na_2HPO_4 \cdot 12H_2O$ in total 90 ml Wasser.

Beispiel 43: Man verfährt analog wie im Beispiel 40, jedoch ausgehend von 27,2 g 1,4-Diketo-2,5-dihydro-3,6-diphenyl-pyrrolo[3,4-c]pyrrol Presskuchen, 2,58 g $Al_2(SO_4)_3 \cdot 16H_2O$ und 2,94 g $Na_2HPO_4 \cdot 12H_2O$ in total 110 ml Wasser.

Beispiel 44: Man verfährt analog wie im Beispiel 40, jedoch ausgehend von 27,2 g 1,4-Diketo-2,5-dihydro-3,6-diphenyl-pyrrolo[3,4-c]pyrrol Presskuchen, 2,66 g Aluminium(III)-acetylacetonat und 2,94 g $Na_2HPO_4 \cdot 12H_2O$ in total 110 ml Wasser.

Beispiele 45-47: Man verfährt analog wie im Beispiel 41, verwendet jedoch die Produkte gemäss Beispiele 42-44 anstelle des Produkts gemäss Beispiel 40.

Beispiel 48: 2 g des gemäss Beispiel 1 erhaltenen Produkts und 48 g Einbrennlack bestehend aus

| | |
|---|---|
| 56 g | Alkyldharz ALKYDAL® F310 (Bayer AG; 60%ig in Xylol) |
| 13 g | Melaminharz CYMEL® 327 (Cyanamid; 90%ig in Butanol) |
| 25 g | Xylol |
| 25 g | Butanol |
| 2,5 g | 1-Methoxy-2-propanol und |
| 1 g | Silikonöl (1%ig in Xylol) |

werden nach üblichen Methoden vermischt. Die Applikation des erhaltenen Farblackes erfolgt durch Ablauf auf Glasplatte. Vor dem Einbrennen im Umluftrockenschrank (30 Minuten bei 120°C) lässt man ca.30 Minuten bei 25° Neigung ablüften.

Die Glanzwerte werden mit einem Glanzmesser (Zehntner ZGM 1020®) in 20° Neigung gemäss DIN 67530

gemessen.

Die so erhaltene Lackierung ergibt im Vergleich zu einer Lackierung mit einem unbeschichteten Pigment einen ganz erstaunlich besseren Glanz.

Beispiele 49-67: Man verfährt analog wie im Beispiel 40, verwendet jedoch anstelle des Produkts gemäss Beispiel 1 die Produkte gemäss Beispiele 5, 8, 9, 10, 15, 17, 18, 22, 23, 26, 29, 30, 34, 35, 38, 41, 45, 46 und 47. Man erhält in allen Fällen etwa gleichwertige Resultate mit einer ganz überraschenden Verbesserung des Glanzes gegenüber Lackierungen mit unbeschichtetem Pigment.

Beispiel 68: 27,2 g eines 36,8%igen Presskuchens 1,4-Diketo-2,5-dihydro-3,6-diphenylpyrrolo[3,4-c]pyrrol werden mit 0,82 g $CaCl_2$ in 70 ml Wasser dispergiert. Dieser Suspension wird mittels einer Pumpe innert 105 Minuten unter Rühren eine Lösung von 2,63 g $Na_2HPO_4 \cdot 12\ H_2O$ in 40 ml Wasser zugefügt. Danach wird die Suspension filtriert und der Rückstand wird mit Wasser gewaschen, bei 80°C getrocknet und pulverisiert.

Beispiel 69: 2 g des gemäss Beispiel 68 erhaltenen Produktes werden in 60 ml Wasser dispergiert. Dann wird dieser Pigmentdispersion eine Aufschlämmung von 0,1 g Polyethylenimin ($M_w$ ~25'000) in 20 ml Wasser zugefügt. Die Suspension wird 16 Stunden gerührt und dann filtriert; der Rückstand wird mit Wasser gewaschen, bei 80°C getrocknet und pulverisiert.

Beispiel 70: 83,3 g eines 36,0%igen Presskuchens C.I. Pigment Blue 15:4 (ein Phthalocyanin-Pigment) werden in 97,7 ml Wasser aufgeschlämmt. Dann werden dieser Pigmentdispersion 7,5 g Zirkonium(IV)acetylacetonat zugegeben. Die Suspension wird in einem dickwandigen Gefäss nach Zugabe von 200 g Glaskugeln (Durchmesser 2 mm) über Nacht unter kräftigem mechanischem Rühren bei hoher Drehzahl dispergiert. Dann wird mittels einer Pumpe innert 15 Minuten unter Weiterrühren eine Lösung von 4,40 g wasserfreiem $Na_2HPO_4$ in 25 ml Wasser zugefügt, wobei nach etwa einem Drittel der Zugabe die Viskosität rasch ansteigt. Nach einer weiteren Stunde Rühren wird die Suspension von den Glaskugeln durch Sieben abgetrennt und dann filtriert; der Rückstand wird mit Wasser gewaschen.

Beispiel 71: Der gemäss Beispiel 70 erhaltene, gewaschene feuchte Presskuchen wird in so viel Wasser wieder aufgeschlämmt, dass das Totalvolumen etwa 300 ml beträgt. Zur vollständigen Dispersion wird die Suspension etwa ½ Stunde gerührt. Dann wird 0,9 g Butylamin zugegeben und anschliessend das Gemisch auf 60°C erhitzt. Nach 4 Stunden wird die Suspension filtriert; der Rückstand wird mit Wasser gewaschen, bei 60°C getrocknet und pulverisiert.

Beispiel 72: 27,2 g eines 36,8%igen Presskuchens 1,4-Diketo-2,5-dihydro-3,6-diphenylpyrrolo[3,4-c]pyrrol werden mit 0,84 g $ZnCl_2$ in 70 ml Wasser dispergiert. Dieser Suspension wird mittels einer Pumpe innert 105 Minuten unter Rühren eine Lösung von 2,2 g $Na_2HPO_4 \cdot 12\ H_2O$ in 20 ml Wasser zugefügt. Danach wird die Suspension filtriert und der Rückstand wird mit Wasser gewaschen, bei 80°C getrocknet und pulverisiert.

Beispiel 73: 5 g des gemäss Beispiel 72 erhaltenen Produktes werden in 60 ml Wasser dispergiert. Dann wird dieser Pigmentdispersion eine Aufschlämmung von 0,25 g Polyethylenimin ($M_w$ ~25'000) in 20 ml Wasser zugefügt. Die Suspension wird 16 Stunden gerührt und dann filtriert; der Rückstand wird mit Wasser gewaschen, bei 80°C getrocknet und pulverisiert.

Beispiel 74: 27,2 g eines 36,8%igen Presskuchens 1,4-Diketo-2,5-dihydro-3,6-diphenylpyrrolo[3,4-c]pyrrol werden mit 1,36 g $Zn(OOC\text{-}CH_3)_2$ in 70 ml Wasser dispergiert. Dieser Suspension wird mittels einer Pumpe innert 105 Minuten unter Rühren eine Lösung von 2,2 g $Na_2HPO_4 \cdot 12\ H_2O$ in 20 ml Wasser zugefügt. Danach wird die Suspension filtriert und der Rückstand wird mit Wasser gewaschen, bei 80°C getrocknet und pulverisiert.

Beispiel 75: 5 g des gemäss Beispiel 74 erhaltenen Produktes werden in 60 ml Wasser dispergiert. Dann wird dieser Pigmentdispersion eine Aufschlämmung von 0,25 g Polyethylenimin ($M_w$ ~25'000) in 20 ml Wasser zugefügt. Die Suspension wird 16 Stunden gerührt und dann filtriert; der Rückstand wird mit Wasser gewaschen, bei 80°C getrocknet und pulverisiert.

Beispiel 76: 1,24 g Acetylaceton werden in 70 ml Wasser gelöst. Eine Lösung von 1,78 g $ZnSO_4 \cdot 7\ H_2O$ in 20 ml Wasser wird zugegeben, dann wird der pH-Wert mit verdünnter Natronlauge von etwa 3,8 auf 7 erhöht, wobei Zn $(acac)_4 \cdot \{aq.\}$ ausfällt. In dieser Suspension werden 27,2 g eines 36,8%igen Presskuchens 1,4-Diketo-2,5-dihydro-3,6-diphenylpyrrolo[3,4-c]pyrrol dispergiert. Anschliessend wird mittels einer Pumpe innert 105 Minuten unter Rühren eine Lösung von 2,2 g $Na_2HPO_4 \cdot 12\ H_2O$ in 20 ml Wasser zugefügt. Danach wird die Suspension filtriert und der Rückstand wird mit Wasser gewaschen, bei 80°C getrocknet und pulverisiert.

Beispiel 77: 5 g des gemäss Beispiel 76 erhaltenen Produktes werden in 60 ml Wasser dispergiert. Dann wird dieser Pigmentdispersion eine Aufschlämmung von 0,25 g Polyethylenimin ($M_w$ ~25'000) in 20 ml Wasser zugefügt. Die Suspension wird 16 Stunden gerührt und dann filtriert; der Rückstand wird mit Wasser gewaschen, bei 80°C getrocknet und pulverisiert.

## Patentansprüche

1. Pigmentzusammensetzung enthaltend ein organisches Pigment dessen Teilchenoberfläche mit einer haftenden

Überzugsschicht versehen ist, dadurch gekennzeichnet, dass die Überzugsschicht

(a) einen Metallphosphatkomplex, in dem das Metall aus der Gruppe Zink, Zirkonium, Titan und Mischungen davon ausgewählt wird,
in einer Menge von 0,5 bis 100 Gew.%, bevorzugt bis 20 Gew.%, besonders bevorzugt von 1 bis 10 Gew.%, bezogen auf das Pigment;
und
(b) mindestens ein Amin der Formel (I) oder ein Ammoniumsalz der Formel (II),

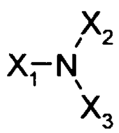 (I)

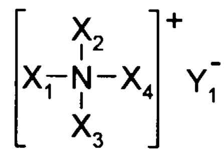 (II)

worin

$X_1$, $X_2$, $X_3$ und gegebenenfalls $X_4$ unabhängig voneinander einen beliebig substituierten Kohlenstoffrest oder Wasserstoff,

jedoch $X_1$, $X_2$ und $X_3$ nicht gleichzeitig Wasserstoff,
und falls $X_1$ und $X_2$ unabhängig voneinander Wasserstoff, Methyl oder Ethyl sind
$X_3$ nicht

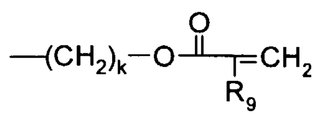

oder ein Polymerisat oder Copolymerisat davon,
worin k eine Zahl von 1 bis 6 und $R_9$ Wasserstoff oder Methyl sind,

und $Y_1$ das Anion einer anorganischen oder organischen Säure bedeuten, in einer Menge von 0,5 bis 15 Gew.%, bevorzugt bis 10 Gew.%, besonders bevorzugt bis 5 Gew.%, bezogen auf das Pigment;

enthält.

**2.** Pigmentzusammensetzung nach Anspruch 1, worin ein Pigment aus der Chinacridon-, Perylen-, Anthrachinon-, Phthalocyanin-, Azo-, Isoindolin-, Isoindolinon- oder Diketopyrrolopyrrolreihe, bevorzugt aus der Chinacridon-, Azo- oder Diketopyrrolopyrrolreihe, besonders bevorzugt aus der Diketopyrrolopyrrolreihe, enthalten ist.

**3.** Pigmentzusammensetzung enthaltend ein organisches Pigment aus der Diketopyrrolopyrrolreihe, dessen Teilchenoberfläche mit einer haftenden Überzugsschicht versehen ist, dadurch gekennzeichnet, dass die Überzugsschicht

(a) einen Metallphosphatkomplex, in dem das Metall aus der Gruppe Calcium, Magnesium, Aluminium, Zink, Zirkonium, Titan und Mischungen davon ausgewählt wird, in einer Menge von 0,5 bis 100 Gew.%, bevorzugt bis 20 Gew.%, besonders bevorzugt von 1 bis 10 Gew.%, bezogen auf das Pigment;
und
(b) mindestens ein Amin der Formel (I) oder ein Ammoniumsalz der Formel (II),

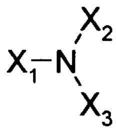 (I) 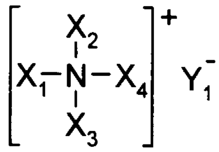 (II)

worin

$X_1$, $X_2$, $X_3$ und gegebenenfalls $X_4$ unabhängig voneinander einen beliebig substituierten Kohlenstoffrest oder Wasserstoff,

jedoch $X_1$, $X_2$ und $X_3$ nicht gleichzeitig Wasserstoff,
und falls $X_1$ und $X_2$ unabhängig voneinander Wasserstoff, Methyl oder Ethyl sind,
$X_3$ nicht

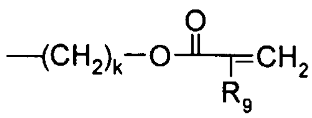

oder ein Polymerisat oder Copolymerisat davon,
worin k eine Zahl von 1 bis 6 und $R_9$ Wasserstoff oder Methyl sind,

und $Y_1$ das Anion einer anorganischen oder organischen Säure bedeuten, in einer Menge von 0,5 bis 15 Gew.%, bevorzugt bis 10 Gew.%, besonders bevorzugt bis 5 Gew.%, bezogen auf das Pigment;

enthält.

**4.** Pigmentzusammensetzung nach Anspruch 1, 2 oder 3, worin

$X_1$,$X_2$ unabhängig voneinander -H oder $-CH_2-R_1$, oder $X_1$ und X2 zusammen $-A_1-N=C(R_2)-$,
$X_3$ $-CH_2-R_1$,

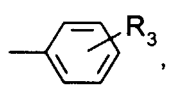 ,

$-A_2-NX_6X_7$ oder $-A_2-[NX_5X_6X_7]^+[Y_1]^-$,
$X_4$,$X_5$ -H, $-CH_3$, $-CH_2-CH_3$,

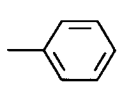 oder 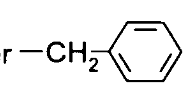 ,

$X_6$,$X_7$ unabhängig von $X_1$ bis $X_3$ -H oder $-CH_2-R_1$,
oder $X_6$ und $X_7$ zusammen $-A_1-N=C(R_2)-$,
oder $X_6$ -H oder $-CH_2-R_1$ und $X_7$ $-(-A_2-NX_6-)_m-A_2-NX_8X_9$ oder
$-(-A_2-[NX_5X_6]^+[Y_1]^--)_m-A_2-[NX_5X_8X_9]^+[Y_2]^-$,
$X_8$,$X_9$ unabhängig voneinander-H oder $-CH_2-R_1$,
oder $X_8$ und $X_9$ zusammen $-A_1-N=C(R_2)-$,
$Y_1$,$Y_2$ unabhängig voneinander $Cl^-$, $Br^-$, $I^-$, $HSO_4^-$, $HPO_4^{2-}$, $HCOO^-$ und $H_3CCOO^-$,
$R_1$ -H, $-C_1-C_{27}$-Alkyl, $-A_3-R_4$,

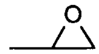,

$-A_3-A_5-R_5$, $-COOM$, $-A_3-COOM$, $-A_3-N(R_6)-A_4-NR_7R_8$, $-A_3-O-R_2$, $-A_3-NHCO-R_2$, $-NHCO-R_2$, $-A_3-(-Si(CH_3)_2-O-)_n-Si(CH_3)_2-A_3-NH_2$ oder $-A_3-SO_2-(CF_2)_p-F$, sowie $-CH=CH_2$, $-A_3-CH=CH_2$,$-A_3-OCO-C(R_9)=CH_2$ oder ein Polymerisat oder Copolymerisat davon, jedoch nicht $-(CH_2)_k-OCO-C(R_9)=CH_2$ oder ein Polymerisat oder Copolymerisat davon, falls $X_1$ und $X_2$ unabhängig voneinander -H, $-CH_3$ oder $-CH_2-CH_3$ sind und k eine Zahl von 0 bis 5 ist,

$R_2$ — $-C_1-C_{20}$-Alkyl,

$R_3$ — $-NR_7R_8$, $-COOM$, $-COO-R_2$,

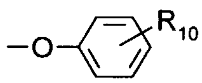, 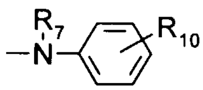,

$-NX_6X_7$ oder $-[NX_5X_6X_7]^+[Y_2]^-$,

$R_4$ — $-OR_6$, $-NR_7R_8$,

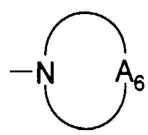

oder $-N(-A_7-R_5)-A_8-R_{11}$,

$R_5$,$R_{11}$ — unabhängig voneinander $-OR_6$ oder $-NR_7R_8$,

$R_6$,$R_7$,$R_8$ — unabhängig voneinander -H, $-CH_3$ oder $-C_2H_5$,

$R_9$ — -H oder $-CH_3$,

$R_{10}$ — -H, $-OR_6$ oder $-NR_7R_8$,

$A_1$ — $-C_2-C_4$-Alkylen,

$A_2$ — $-C_2-C_{10}$-Alkylen, $-A_4-NHCONH-A_4-NR_7-A_1-O-A_1-$ oder $-A_4-NHCO-A_3-CONH-A_4-NR_7-A_1-O-A_1-$,

$A_3$ — $-C_1-C_{10}$-Alkylen,

$A_4$ — $-C_2-C_{10}$-Alkylen,

$A_5$ — eine Kette aus q sich wiederholenden Einheiten $-O-A_1-$, wobei jeder $A_1$ in einer beliebigen sich wiederholenden Einheit von $A_1$ in den anderen sich wiederholenden Einheiten unabhängig ist,

$A_6$ — $-A_1-O-A_1-$, $-A_1-NR_6-A_1-$ oder $-A_9-$,

$A_7$ — eine Kette aus r sich wiederholenden Einheiten $-O-A_1-$, wobei jeder $A_1$ in einer beliebigen sich wiederholenden Einheit von $A_1$ in den anderen sich wiederholenden Einheiten unabhängig ist,

$A_8$ — $-A_7-$ oder eine direkte Bindung,

$A_9$ — $-C_4-C_7$-Alkylen,

M — -H, -K, -Li oder -Na,

m — eine Zahl von 1 bis 3000,

n — eine Zahl von 20 bis 200,

p — eine Zahl von 1 bis 20,

q — eine Zahl von 1 bis 50 und

r — eine Zahl von 1 bis 20 bedeuten.

**5.** Pigmentzusammensetzung nach Anspruch 4, worin

$X_1$,$X_2$ — unabhängig voneinander-H oder $-CH_2-R_1$,

$X_3$ — $-CH_2-R_{13}$, $-A_{10}-NHX_7$ oder $-A_{10}-[NH_5X_7]^+[Y_1]^-$,

$X_4$,$X_5$ — -H, $-CH_3$, $-C_2H_5$,

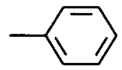 oder 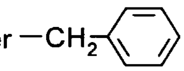 ,

| | |
|---|---|
| $X_7$ | unabhängig von $X_1$ bis $X_3$ -H, $-CH_2-R_1$, $-(-A_2-NH-)_m-A_2-NX_8X_9$ oder $-(-A_2-[NHX_5]^+[Y_1]^--)_m-A_2-[NX_5X_8X_9]^+[Y_2]^-$, |
| $X_8,X_9$ | unabhängig voneinander -H oder $-CH_2-R_1$, |
| $Y_1,Y_2$ | $Cl^-$, $Br^-$, $I^-$, $HSO_4^-$, $HPO_4^{2-}$, $HCOO^-$ und $H_3CCOO^-$, |
| $R_1$ | -H, $-CH_3$, $-(CH_2)_s-CH_3$, $-A_{11}-NH_2$, |

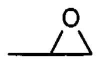 ,

| | |
|---|---|
| | $-A_{11}-A_5-R_5$, -COOM, $-A_{13}$-COOM, $-A_{11}-NH-A_{10}-NH_2$, oder $-A_{10}$-N $HCO-R_2$, |
| $R_2$ | $-C_6-C_{18}$-Alkyl, |
| $R_5$ | $-OR_6$ oder $-NHR_7$, |
| $R_6,R_7,R_8$ | unabhängig voneinander -H oder $-CH_3$, insbesondere -H, |
| $R_{13}$ | $-C_1-C_{21}$-Alkyl, $-A_3-NR_7R_8$ oder $-A_{14}-A_{12}-R_5$, |
| $A_1$ | $-CH_2-CH_2-$ oder $-CH_2-CH(CH_3)-$, insbesondere $-CH_2-CH_2-$, |
| $A_2$ | $-C_2-C_4$-Alkylen, insbesondere $-CH_2-CH_2-$, |
| $A_3$ | $-C_1-C_{10}$-Alkylen, |
| $A_5$ | eine Kette aus q sich wiederholenden Einheiten $-O-A_1-$, wobei jeder $A_1$ in einer beliebigen sich wiederholenden Einheit von $A_1$ in den anderen sich wiederholenden Einheiten unabhängig ist, |
| $A_6$ | $-A_1-O-A_1-$, $-A_1-NR_6-A_1-$ oder $-A_9-$, |
| $A_{10}$ | $-C_2-C_4$-Alkylen, insbesondere $-CH_2-CH_2-CH_2-$, |
| $A_{11}$ | $-C_1-C_5$-Alkylen, insbesondere $-CH_2-$, |
| $A_{12}$ | eine Kette aus t sich wiederholenden Einheiten $-O-A_1-$, wobei jeder $A_1$ in einer beliebigen sich wiederholenden Einheit von $A_1$ in den anderen sich wiederholenden Einheiten unabhängig ist, |
| $A_{13}$ | $-C_1-C_4$-Alkylen, |
| $A_{14}$ | $-C_1-C_5$-Alkylen, insbesondere $-CH_2-CH_2-CH_2-$, |
| M | -H, -K, -Li oder -Na, |
| m | eine Zahl von 1 bis 2000, |
| q | eine Zahl von 2 bis 5, insbesondere 2 oder 5, |
| s | eine Zahl 6, 8, 10, 12, 14, 16 oder 18 und |
| t | eine Zahl von 10 bis 30, insbesondere 10, 15, 20, 25 oder 30 bedeuten. |

**6.** Pigmentzusammensetzung nach Anspruch 1, 2 oder 3, worin als Amin der Formel (I) ein Polyethylenimin von $M_w$ 1'000 bis $M_w$ 70'000 verwendet wird.

**7.** Verfahren zur Herstellung einer Pigmentzusammensetzung nach Anspruch 1 oder 3, dadurch gekennzeichnet, dass man

(a') ein mit 0,5 bis 100 Gew.%, bezogen auf das Pigment, eines mit einem entsprechenden Metallphosphatkomplex überzogenen organischen Pigments, mit

(b') 0,5 bis 15 Gew.%, bevorzugt bis 10 Gew.%, besonders bevorzugt bis 5 Gew.%, eines entsprechenden Amins oder Ammoniumsalzes, bezogen auf das Pigment,

behandelt.

**8.** Verfahren zur Herstellung einer Pigmentzusammensetzung nach Anspruch 1 oder 3, dadurch gekennzeichnet, dass man

(a') ein mit 0,5 bis 100 Gew.%, bezogen auf das Pigment, eines mit einem entsprechenden Metallphosphatkomplex überzogenen organischen Pigments,

(ii') mit einem Amin oder Ammoniumsalz, dann mit

(b') 0,5 bis 15 Gew.%, bevorzugt bis 10 Gew.%, besonders bevorzugt bis 5 Gew.%, eines Amins der Formel (I) oder Ammoniumsalzes der Formel (II), bezogen auf das Pigment,

behandelt.

**9.** Verfahren zur Herstellung einer Pigmentzusammensetzung nach Anspruch 1 oder 3, dadurch gekennzeichnet, dass man ein organisches Pigment gleichzeitig oder in beliebiger Reihenfolge, bevorzugt in der Reihenfolge (b")-(a")-(c") oder insbesondere (a")-(b")-(c"), mit

(a") einem entsprechenden Ca-, Mg-, Al-, Zn-, Zr- und/oder Ti-Salz oder -Chelatkomplex,
(b") einer Phosphationen liefernden Verbindung, und
(c") einem entsprechenden Amin oder Ammoniumsalz

behandelt.

**10.** Verfahren nach Anspruch 7, 8 oder 9, worin Calciumchlorid, Calciumacetat, Tricalciumdicitrat, Magnesiumchlorid, Magnesiumacetat, Trimagnesiumdicitrat, Aluminiumsulfat, Aluminiumacetylacetonat, Zinksulfat, Zinkacetat oder Zinkacetylacetonat verwendet wird.

**11.** Verfahren nach Anspruch 7, 8 oder 9, worin ein Zr- oder Ti-Salz oder -Komplex, ausgewählt aus Zirkoniumsulfat, Zirkoniumammoniumcarbonat, Zirkoniumacetat, Zirkoniumpropionat, Zirkonylchlorid, Titan(IV)chlorid oder Titanylsulfat, oder insbesondere ein Chelat der Formel

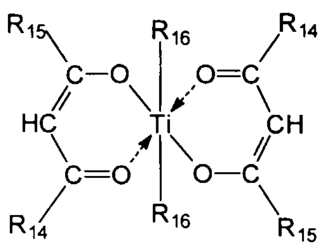 (III), 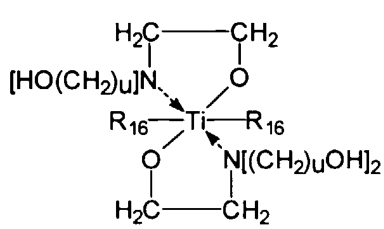 (IV) oder 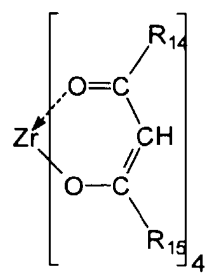 (V),

worin u eine Zahl von 1 bis 3, bevorzugt 2, $R_{14}$ Methyl, Ethyl, Methoxy oder Ethoxy, bevorzugt Methyl oder Ethoxy, $R_{15}$ Methyl oder Ethyl, bevorzugt Methyl, und $R_{16}$ Halogen oder $C_1$-$C_4$-Alkoxy, bevorzugt $C_1$-$C_4$-Alkoxy, besonders bevorzugt Isopropoxy, bedeuten, oder eine Mischung davon, verwendet wird.

**12.** Verfahren nach Anspruch 7, 8 oder 9, worin eine Phosphationen liefernde Verbindung ausgewählt aus Orthophosphorsäure, Orthophosphate, wie $MH_2PO_4$, $M_2HPO_4$ oder $M_3PO_4$, Metaphosphorsäure, Knorre Salz $[(NaPO_3)_3 \cdot 6H_2O]$, Grahamsches Salz $[(NaPO_3)_6]$, Calgon $[(NaPO_3)_{12-13} \cdot Na_2O]$, $M_2H_2P_2O_7$ und $M_4P_2O_7$, wobei M Na, K oder $NH_4$ bedeutet, bevorzugt Orthophosphate, besonders bevorzugt $Na_2HPO_4$ oder $Na_3PO_4$, verwendet wird.

**13.** Hochmolekulares organisches Material enthaltend eine Pigmentzusammensetzung nach einem der Ansprüche 1 bis 6.

**14.** Hochmolekulares organisches Material nach Anspruch 13, dadurch gekennzeichnet, dass es sich um einen Lack oder eine Druckfarbe, bevorzugt um einen Automobillack oder eine Effektlackierung, handelt.

**15.** Hochmolekulares organisches Material nach Anspruch 13, dadurch gekennzeichnet, dass es sich um einen Lack handelt und als Amin der Formel (I) ein Polyethylenimin von $M_w$ 2'000 bis $M_w$ 70'000 verwendet wird.

## Claims

1. A pigment composition comprising an organic pigment whose particle surface is provided with an adhering coating layer, which coating layer comprises

   (a) a metal phosphate complex in which the metal is selected from the group consisting of zinc, zirconium, titanium and mixtures thereof in a quantity of from 0.5 to 100 % by weight, preferably up to 20 % by weight, particularly preferably from 1 to 10 % by weight, based on the pigment;
   and
   (b) at least one amine of the formula (I) or an ammonium salt of the formula (II)

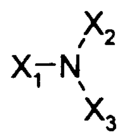 (I) 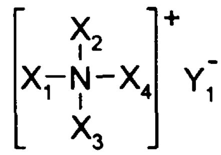 (II)

   in which

   $X_1$, $X_2$, $X_3$ and, where present, $X_4$ independently of one another are an unsubstituted or substituted hydrocarbon radical or are hydrogen,

   but $X_1$, $X_2$ and $X_3$ are not simultaneously hydrogen, and, if $X_1$ and $X_2$ independently of one another are hydrogen, methyl or ethyl,
   $X_3$ is not

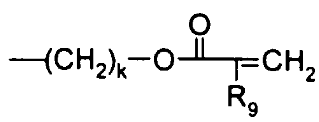

   or a polymer or a copolymer thereof, in which k is a number from 1 to 6 and $R_9$ is hydrogen or methyl,

   and $Y_1$ is the anion of an inorganic or organic acid,
   in a quantity of from 0.5 to 15% by weight, preferably up to 10 % by weight, particularly preferably up to 5 % by weight, based on the pigment.

2. A pigment composition according to claim 1, in which the pigment is from the quinacridone, perylene, anthraquinone, phthalocyanine, azo, isoindoline, isoindolinone or diketopyrrolopyrrole series, preferably from the quinacridone, azo or diketopyrrolopyrrcle series, particularly preferably from the diketopyrrolopyrrole series.

3. A pigment composition comprising an organic pigment from the diketopyrrolopyrrole series, whose particle surface is provided with an adhering coating layer, which coating layer comprises

   (a) a metal phosphate complex in which the metal is selected from the group consisting of calcium, magnesium, aluminium, zinc, zirconium, titanium and mixtures thereof in a quantity of from 0.5 to 100 % by weight, preferably up to 20 % by weight, particularly preferably from 1 to 10 % by weight, based on the pigment;
   and
   (b) at least one amine of the formula (I) or an ammonium salt of the formula (II)

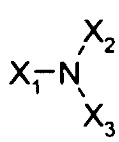 (I) 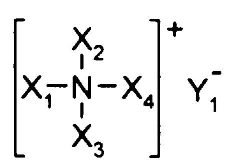 (II)

in which

$X_1$, $X_2$, $X_3$ and, where present, $X_4$ independently of one another are an unsubstituted or substituted hydrocarbon radical or are hydrogen,

but $X_1$, $X_2$ and $X_3$ are not simultaneously hydrogen, and, if $X_1$ and $X_2$ independently of one another are hydrogen, methyl or ethyl,
$X_3$ is not

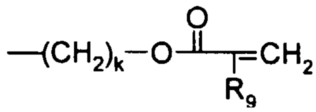

or a polymer or a copolymer thereof, in which k is a number from 1 to 6 and $R_9$ is hydrogen or methyl,

and $Y_1$ is the anion of an inorganic or organic acid,
in a quantity of from 0.5 to 15 % by weight, preferably up to 10 % by weight, particularly preferably up to 5 % by weight, based on the pigment.

**4.** A pigment composition according to claim 1, 2 or 3, in which

$X_1$,$X_2$ independently of one another are -H or $-CH_2-R_1$, or $X_1$ and $X_2$ together are $-A_1-N=C(R_2)-$,
$X_3$ is $-CH_2-R_1$,

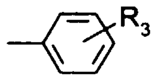,

$-A_2-NX_6X_7$ or $-A_2-[NX_5X_6X_7]^+[Y_1]^-$,
$X_4$,$X_5$ are -H, $-CH_3$, $-CH_2-CH_3$,

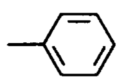 or 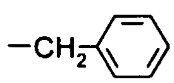,

$X_6$,$X_7$ independently of $X_1$ to $X_3$ are -H or $-CH_2-R_1$,
or $X_6$ and $X_7$ together are $-A_1-N=C(R_2)-$,
or $X_6$ is -H or $-CH_2-R_1$ and $X_7$ is $-(-A_2-NX_6-)_m-A_2-NX_8X_9$ or
$-(-A_2-[NX_5X_6]^+[Y_1]^--)_m-A_2-[NX_5X_8X_9]^+[Y_2]^-$,
$X_8$,$X_9$ independently of one another are -H or $-CH_2-R_1$,
or $X_8$ and $X_9$ together are $-A_1-N=C(R_2)-$,
$Y_1$,$Y_2$ independently of one another are $Cl^-$, $Br^-$, $I^-$, $HSO_4^-$, $HPO_4^{2-}$, $HCOO^-$ and $H_3CCOO^-$,
$R_1$ is -H, $-C_1-C_{27}$alkyl, $-A_3-R_4$,

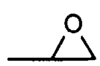,

$-A_3-A_5-R_5$, -COOM, $-A_3-COOM$,
$-A_3-N(R_6)-A_4-NR_7R_8$, $-A_3-O-R_2$, $-A_3-NHCO-R_2$, $-NHCO-R_2$,
$-A_3-(-Si(CH_3)_2-O-)_n-Si(CH_3)_2-A_3-NH_2$ or $-A_3-SO_2-(CF_2)_p-F$, and also $-CH=CH_2$, $-A_3-CH=CH_2$, $-A_3-OCO-C(R_9)=CH_2$ or a polymer or copolymer thereof,
but not $-(CH_2)_k-OCO-C(R_9)=CH_2$ or a polymer or copolymer thereof, if $X_1$ and $X_2$ independently of one another are -H, $-CH_3$ or $-CH_2-CH_3$ and k is a number from 0 to 5,
$R_2$ is $-C_1-C_{20}$alkyl,
$R_3$ is $-NR_7R_8$, -COOM, $-COO-R_2$,

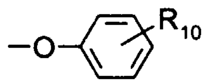,

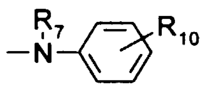,

$-NX_6X_7$ or $-[NX_5X_6X_7]^+[Y_2]^-$,

$R_4$ is $-OR_6$, $-NR_7R_8$,

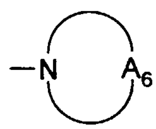

or $-N(-A_7-R_5)-A_8-R_{11}$,

$R_5,R_{11}$ independently of one another are $-OR_6$ or $-NR_7R_8$,

$R_6,R_7,R_8$ independently of one another are -H, $-CH_3$ or $-C_2H_5$,

$R_9$ is -H or $-CH_3$,

$R_{10}$ is -H, $-OR_6$ or $-NR_7R_8$,

$A_1$ is $-C_2-C_4$alkylene,

$A_2$ is $-C_2-C_{10}$alkylene, $-A_4-NHCONH-A_4-NR_7-A_1-O-A_1-$ or $-A_4-NHCO-A_3-CONH-A_4-NR_7-A_1-O-A_1-$,

$A_3$ is $-C_1-C_{10}$alkylene,

$A_4$ is $-C_2-C_{10}$alkylene,

$A_5$ is a chain comprising q repeating units $-O-A_1-$, in which each $A_1$ in any repeating unit is independent of $A_1$ in the other repeating units,

$A_6$ is $-A_1-O-A_1-$, $-A_1-NR_6-A_1-$ or $-A_9-$,

$A_7$ is a chain comprising r repeating units $-O-A_1-$, in which each $A_1$ in any repeating unit is independent of $A_1$ in the other repeating units,

$A_8$ is $-A_7-$ or a direct bond,

$A_9$ is $-C_4-C_7$alkylene,

M is -H, -K, -Li or -Na,

m is a number from 1 to 3000,

n is a number from 20 to 200,

p is a number from 1 to 20,

q is a number from 1 to 50, and

r is a number from 1 to 20.

**5.** A pigment composition according to claim 4, in which

$X_1,X_2$ independently of one another are -H or $-CH_2-R_1$,

$X_3$ is $-CH_2-R_{13}$, $-A_{10}-NHX_7$ or $-A_{10}-[NHX_5X_7]^+[Y_1]^-$,

$X_4,X_5$ is -H, $-CH_3$, $-C_2H_5$,

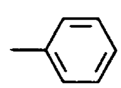 or 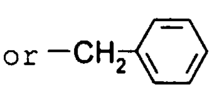,

$X_7$ independently of $X_1$ to $X_3$ is -H, $-CH_2-R_1$, $-(-A_2-NH-)_m-A_2-NX_8X_9$ or $-(-A_2-[NHX_5]^+[Y_1]^--)_m-A_2-[NX_5X_8X_9]^+[Y_2]^-$,

$X_8,X_9$ independently of one another are -H or $-CH_2-R_1$,

$Y_1,Y_2$ are $Cl^-$, $Br^-$, $I^-$, $HSO_4^-$, $HPO_4^{2-}$, $HCOO^-$ and $H_3CCOO^-$,

$R_1$ is -H, $-CH_3$, $-(CH_2)_s-CH_3$, $-A_{11}-NH_2$,

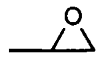 ,

$-A_{11}-A_5-R_5$, -COOM, $-A_{13}$-COOM, $-A_{11}-NH-A_{10}-NH_2$, or $-A_{10}-NHCO-R_2$,

$R_2$ is $-C_6-C_{18}$alkyl,

$R_5$ is $-OR_6$ or $-NHR_7$,

$R_6,R_7,R_8$ independently of one another are -H or $-CH_3$, in particular -H,

$R_{13}$ is $-C_1-C_{21}$alkyl, $-A_3-NR_7R_8$ or $-A_{14}-A_{12}-R_5$,

$A_1$ is $-CH_2-CH_2-$ or $-CH_2-CH(CH_3)-$, in particular $-CH_2-CH_2-$,

$A_2$ is $-C_2-C_4$alkylene, in particular $-CH_2-CH_2-$,

$A_3$ is $-C_1-C_{10}$alkylene,

$A_5$ is a chain comprising q repeating units $-O-A_1-$, in which each $A_1$ in any repeating unit is independent of $A_1$ in the other repeating units,

$A_6$ is $-A_1-O-A_1-$, - $A_1-NR_6-A_1-$ or $-A_9-$,

$A_{10}$ is $-C_2-C_4$alkylene, in particular $-CH_2-CH_2-CH_2-$,

$A_{11}$ is $-C_1-C_5$alkylene, in particular $-CH_2-$,

$A_{12}$ is a chain comprising t repeating units $-O-A_1-$, in which each $A_1$ in any repeating unit is independent of $A_1$ in the other repeating units,

$A_{13}$ is $-C_1-C_4$alkylene,

$A_{14}$ is $-C_1-C_5$alkylene, in particular $-CH_2-CH_2-CH_2-$,

M is -H, -K, -Li or -Na,

m is a number from 1 to 2000,

q is a number from 2 to 5, in particular 2 or 5,

s is a number 6, 8, 10, 12, 14, 16 or 18, and

t is a number from 10 to 30, in particular 10, 15, 20, 25 or 30.

**6.** A pigment composition according to claim 1, 2 or 3, in which the amine of the formula (I) used is a polyethyleneimine of $M_w$ 1000 to $M_w$ 70,000.

**7.** A process for preparing a pigment composition according to claim 1 or 3, which comprises treating

(a') an organic pigment coated with from 0.5 to 100 % by weight, based on the pigment, of an appropriate metal phosphate complex, with

(b') from 0.5 to 15 % by weight, preferably up to 10 % by weight, particularly preferably up to 5 % by weight, based on the pigment of an appropriate amine or ammonium salt.

**8.** A process for preparing a pigment composition according to claim 1 or 3, which comprises treating

a') an organic pigment coated with from 0.5 to 100 % by weight, based on the pigment, of an appropriate metal phosphate complex,

ii') with an amine or ammonium salt, then with

b') from 0.5 to 15 % by weight, preferably up to 10 % by weight, particularly preferably up to 5 % by weight, of an amine of the formula (I) or ammonium salt of the formula (II), based on the pigment.

**9.** A process for preparing a pigment composition according to claim 1 or 3, which comprises treating an organic pigment, simultaneously or in any desired sequence, preferably in the sequence (b")-(a")-(c") or in particular (a")-(b")-(c"), with

(a") an appropriate calcium, magnesium, aluminium, zinc, zirconium and/or titanium salt or chelate complex,
(b") a phosphate ion donor compound, and
(c") an appropriate amine or ammonium salt.

**10.** A process according to claim 7, 8 or 9, in which calcium chloride, calcium acetate, tricalcium dicitrate, magnesium chloride, magnesium acetate, trimagnesium dicitrate, aluminium sulfate, aluminium acetylacetonate, zinc sulfate, zinc acetate or zinc acetylacetonate is used.

**11.** A process according to claim 7, 8 or 9, in which a zirconium salt or titanium salt or complex selected from zirconium sulfate, zirconium ammonium carbonate, zirconium acetate, zirconium propionate, zirconyl chloride, titanium(IV) chloride or titanyl sulfate, or in particular a chelate of the formula

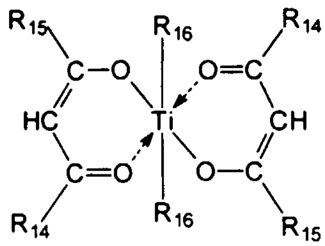 (III) , 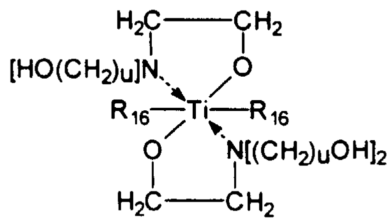 (IV)

or

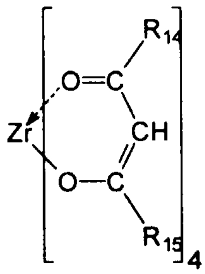 (V) ,

in which u is a number from 1 to 3, preferably 2, $R_{14}$ is methyl, ethyl, methoxy or ethoxy, preferably methyl or ethoxy, $R_{15}$ is methyl or ethyl, preferably methyl, and $R_{16}$ is halogen or $C_1$-$C_4$alkoxy, preferably $C_1$-$C_4$alkoxy, particularly preferably isopropoxy, or a mixture thereof, is used.

**12.** A process according to claim 7, 8 or 9, in which a phosphate ion donor compound selected from orthophosphoric acid, orthophosphates, such as $MH_2PO_4$, $M_2HPO_4$ or $M_3PO_4$, metaphosphoric acid, Knorr's salt [$(NaPO_3)_3$•$6H_2O$], Graham's salt [$(NaPO_3)_6$], Calgon [$(NaPO_3)_{12-13}$•$Na_2O$], $M_2H_2P_2O_7$ and $M_4P_2O_7$, where M is Na, K or NH4, preferably orthophosphates, particularly preferably $Na_2HPO_4$ or $Na_3PO_4$, is used.

**13.** A high molecular weight organic material comprising a pigment composition according to one of claims 1 to 6.

**14.** A high molecular weight organic material according to claim 13, which is a paint or a printing ink, preferably an automotive paint or a special-effect coating.

**15.** A high molecular weight organic material according to claim 13, which is a paint in which the amine of the formula (I) used is a polyethyleneimine of $M_w$ 2000 to $M_w$ 70,000.

## Revendications

**1.** Composition pigmentaire contenant un pigment organique dont la surface de particules est munie d'une couche de revêtement adhérent, caractérisée en ce que le la couche de revêtement contient

a) un complexe de phosphate métallique dans lequel le métal est pris dans le groupe constitué par le zinc, le zirconium, le titane et leurs mélanges, en une quantité de 0,5 à 100% en masse, de préférence de 20% en masse, de manière particulièrement préférée de 1 à 10% en masse, par rapport au pigment ;
et

b) au moins une amine de formule (I) ou un sel d'ammonium de formule (II),

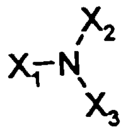 (I) 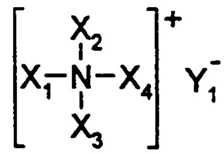 (II)

où $X_1$, $X_2$, $X_3$ et éventuellement $X_4$ représentent, indépendamment les uns des autres, un reste hydrocarboné substitué arbitrairement ou un atome d'hydrogène,

toutefois $X_1$, $X_2$ et $X_3$ ne représentent pas simultanément des atomes d'hydrogène,
et dans le cas où $X_1$ et $X_2$ représentent, indépendamment l'un de l'autre, des atomes d'hydrogène, des groupes méthyle ou éthyle,
$X_3$ ne représente pas

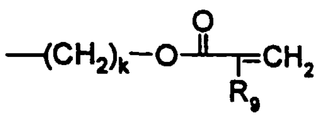

ou un polymère ou copolymère de celui-ci, où
k va de 1 à 6 et $R_9$ représente un atome d'hydrogène ou un groupe méthyle,

et $Y_1$ représente l'anion d'un acide organique ou inorganique, en une quantité de 0,5 à 15% en masse, de préférence jusqu'à 10% en masse, de manière particulièrement préférée jusqu'à 5% en masse, par rapport au pigment.

**2.** Composition pigmentaire selon la revendication 1, contenant un pigment de la famille des quinacridones, des pérylènes, des anthraquinones, des phtalocyanines, des pigments azoïques, de l'isoindoline, de l'isoindolinone ou des dicétopyrrolopyrroles, de préférence de la famille des quinacridones, des pigments azoïques ou des dicétopyrrolopyrroles, de manière particulièrement préférée de la famille des dicétopyrrolopyrroles.

**3.** Composition pigmentaire contenant un pigment organique de la famille des dicétopyrrolopyrroles, dont la surface de particules est munie d'une couche de revêtement adhérente, caractérisée en ce que le revêtement contient

(a) un complexe de phosphate métallique, où le métal est pris dans le groupe constitué par le calcium, le magnésium, l'aluminium, le zinc, le zirconium, le titane et leurs mélanges,
en une quantité de 0,5 à 100% en masse, de préférence de 20% en masse, de manière particulièrement préférée de 1 à 10% en masse, par rapport au pigment ;
et
(b) au moins une amine de formule (I) ou un sel d'ammonium de formule (II)

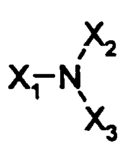 (I) 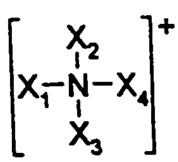 (II)

où $X_1$, $X_2$, $X_3$ et éventuellement $X_4$ représentent, indépendamment les uns des autres, un reste hydrocarboné substitué arbitrairement ou un atome d'hydrogène,

toutefois, $X_1$, $X_2$ et $X_3$ ne représentent pas simultanément des atomes d'hydrogène,
et dans le cas où $X_1$ et $X_2$ représentent, indépendamment l'un de l'autre, des atomes d'hydrogène,

des groupes méthyle ou éthyle,
$X_3$ ne représente pas

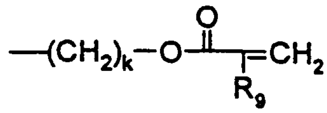

ou un polymère ou copolymère de celui-ci, où
k va de 1 à 6 et $R_9$ représente un atome d'hydrogène ou un groupe méthyle, et

et $Y_1$ représente l'anion d'un acide organique ou inorganique,
en une quantité de 0,5 à 15% en masse, de préférence jusqu'à 10% en masse, de manière particulièrement préférée jusqu'à 5% en masse, par rapport au pigment.

**4.** Composition pigmentaire selon la revendication 1, 2 ou 3, dans laquelle

$X_1$, $X_2$ représentent, indépendamment l'un de l'autre, -H ou $-CH_2-R_1$,
ou $X_1$ et $X_2$ ensemble représentent $-A_1-N=C(R_2)-$,
$X_3$ représente $-CH_2-R_1$,

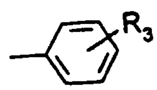 ,

$-A_2-NX_6X_7-$, ou $-A_2-[NX_5X_6X_7]^+[Y_1]^-$,
$X_4$, $X_5$ représentent -H, $-CH_3$, $-CH_2-CH_3$,

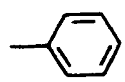

ou

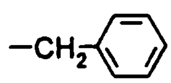 ,

$X_6$, $X_7$ représentent, indépendamment de $X_1$ à $X_3$, -H ou $-CH_2-R_1$,
ou $X_6$ et $X_7$ ensemble représentent $-A_1-N=C(R_2)-$,
ou $X_6$ représente -H ou $-CH_2-R_1$ et $X_7$ représente $-(-A_2-NX_6-)_m-A_2-NX_8X_9$ ou
$-(-A_2-[NX_5X_6]^+[Y_1]^--)_m-A_2-[NX_5X_8X_9]^+[Y_2]^-$,
$X_8$, $X_9$ représentent, indépendamment l'un de l'autre, -H ou $-CH_2-R_1$,
ou $X_8$ et $X_9$ ensemble représentent $-A_1-N=C(R_2)-$,
$Y_1$, $Y_2$ représentent, indépendamment l'un de l'autre, $Cl^-$, $Br^-$, $I^-$, $HSO_4^-$, $HPO_4^{2-}$, $HCOO^-$ et $H_3CCOO^-$,
$R_1$ représente -H, -alkyle en $C_1$-$C_{27}$, $-A_3-R_4$,

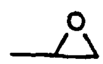 ,

$-A_3-A_5-R_5$, -COOM, $-A_3-COOM$, $-A_3-N(R_6)-A_4-NR_7R_8$,
$-A_3-O-R_2$, $-A_3-NHCO-R_2$, $-NHCO-R_2$,
$-A_3-(-Si(CH_3)_2-O-)_n-Si(CH_3)_2-A_3-NH_2$ ou
$-A_3-SO_2-(CF_2)_p-F$,
ainsi que $-CH=CH_2$, $-A_3-CH=CH_2$, $-A_3-OCO-C(R_9)=CH_2$ ou un de leurs polymères ou copolymères,

toutefois, ne représente pas $-(CH_2)_k-OCO-(R_9)=CH_2$ ou un de ses polymères ou copolymères, dans le cas où $X_1$ et $X_2$ représentent indépendamment l'un de l'autre -H, $-CH_3$ ou $-CH_2-CH_3$ et k est un nombre de 0 à 5,

$R_2$ représente un groupe -alkyle en $C_1-C_{20}$,

$R_3$ représente $-NR_7R_8$, -COOM, $-COO-R_2$,

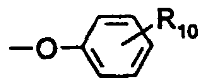,

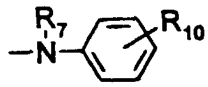,

$-NX_6X_7$ ou $-[NX_5X_6X_7]^+[Y_2]^-$,

$R_4$ représente $-OR_6$, $-NR_7R_8$,

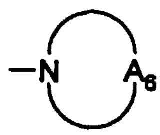

ou $-N(-A_7-R_5)-A_8-R_{11}$,

$R_5$, $R_{11}$ représentent, indépendamment l'un de l'autre, $-OR_6$ ou $-NR_7R_8$,

$R_6$, $R_7$, $R_8$ représentent, indépendamment l'un de l'autre, -H, $-CH_3$ ou $-C_2H_5$,

$R_9$ représente -H ou-$CH_3$,

$R_{10}$ représente -H, $-OR_6$ ou $-NR_7R_8$,

$A_1$ représente un groupe -alkylène en $C_2-C_4$,

$A_2$ représente des groupes -alkylène en $C_2-C_{10}$,
$-A_4-NHCONH-A_4-NR_7-A_1-O-A_1-$ ou
$-A_4-NHCO-A_3-CONH-A_4-NR_7-A_1-O-A_1-$,

$A_3$ représente un groupe -alkylène en $C_1-C_{10}$,

$A_4$ représente un groupe -alkylène en $C_2-C_{10}$,

$A_5$ représente une chaîne constituée par q motifs récurrents $-O-A_1-$, chaque $A_1$ dans un motif récurrent quelconque étant indépendant de $A_1$ dans les autres motifs récurrents,

$A_6$ représente $-A_1-O-A_1-$, $-A_1-NR_6-A_1-$ ou $-A_9-$,

$A_7$ représente une chaîne constituée par r motifs récurrents $-O-A_1-$, chaque $A_1$ dans un motif récurrent quelconque étant indépendant de $A_1$ dans les autres motifs récurrents,

$A_8$ représente $-A_7-$ ou une liaison directe,

$A_9$ représente un groupe -alkylène en $C_4-C_7$,

M représente -H, -K, -Li ou -Na,

m est un nombre de 1 à 3000,

n est un nombre de 20 à 200,

p est un nombre de 1 à 20,

q est un nombre de 1 à 50, et

r est un nombre de 1 à 20.

**5.** Composition pigmentaire selon la revendication 4, dans laquelle

$X_1$, $X_2$ représentent, indépendamment l'un de l'autre, -H ou $-CH_2-R_1$,

$X_3$ représente $-CH_2-R_{13}$, $-A_{10}-NHX_7$ ou $-A_{10}-[NX_5X_7]^+[Y_1]^-$,

$X_4$, $X_5$ représentent -H, $-CH_3$, $-C_2H_5$,

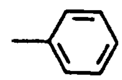

ou

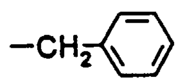,

| | |
|---|---|
| $X_7$ | représente, indépendant de $X_1$ à $X_3$, -H ou - $CH_2$-$R_1$, $-(-A_2-NH-)_m-A_2-NX_8X_9$ ou $-(-A_2-[NHX_5]^+[Y_1]^--)_m-A_2-NX_5X_8X_9]^+[Y_2]^-$, |
| $X_8$, $X_9$ | représentent, indépendamment l'un de l'autre, -H ou $-CH_2-R_1$, |
| $Y_1$, $Y_2$ | représentent, indépendamment l'un de l'autre, $Cl^-$, $Br^-$, $I^-$, $HSO_4^-$, $HPO_4^{2-}$, $HCOO^-$ et $H_3CCOO^-$, |
| $R_1$ | représente -H, $-CH_3$, $-(CH_2)_s-CH_3$, $-A_{11}-NH_2$, 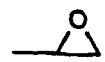 , $-A_{11}-A_5-R_5$, -COOM, $-A_{13}$-COOM, $-A_{11}-NH-A_{10}-NH_2$, ou $-A_{10}-NHCO-R_2$, |
| $R_2$ | représente un groupe -alkyle en $C_6$-$C_{18}$, |
| $R_5$ | représente $-OR_6$ ou $-NHR_7$, |
| $R_6$, $R_7$, $R_8$ | représentent indépendamment l'un de l'autre, -H ou $-CH_3$, en particulier -H, |
| $R_{13}$ | représente des groupes alkyle en $C_1$-$C_{21}$, $-A_3-NR_7R_8$ ou $-A_{14}-A_{12}-R_5$, |
| $A_1$ | représente $-CH_2-CH_2-$ ou $-CH_2-CH(CH_3)-$, en particulier $-CH_2-CH_2-$, |
| $A_2$ | représente un groupe -alkylène en $C_2$-$C_4$, en particulier $-CH_2-CH_2-$, |
| $A_3$ | représente un groupe -alkylène en $C_1$-$C_{10}$, |
| $A_5$ | représente une chaîne constituée par q motifs récurrents $-O-A_1-$, chaque $A_1$ dans un motif récurrent quelconque étant indépendant de $A_1$ dans les autres motifs récurrents, |
| $A_6$ | représente $-A_1-O-A_1-$, $-A_1-NR_6-A_1-$ ou $-A_9-$, |
| $A_{10}$ | représente un groupe -alkylène en $C_2$-$C_4$, en particulier $-CH_2-CH_2-CH_2-$, |
| $A_{11}$ | représente un groupe -alkylène en $C_1$-$C_5$, en particulier $-CH_2-$, |
| $A_{12}$ | représente une chaîne constituée par t motifs récurrents $-O-A_1-$, chaque $A_1$ dans un motif récurrent quelconque étant indépendant de $A_1$ dans les autres motifs récurrents, |
| $A_{13}$ | représente un groupe -alkylène en $C_1$-$C_4$, |
| $A_{14}$ | représente un groupe -alkylène en $C_1$-$C_5$, en particulier $-CH_2-CH_2-CH_2-$, |
| M | représente -H, -K, -Li ou -Na, |
| m | est un nombre de 1 à 2000, |
| q | est un nombre de 2 à 5, en particulier vaut 2 ou 5, |
| s | vaut 6, 8, 10, 12, 14, 16 ou 18 et |
| t | est un nombre de 10 à 30, en particulier vaut 10, 15, 20, 25 ou 30, |

**6.** Composition pigmentaire selon la revendication 1, 2 ou 3, dans laquelle on emploie, en tant qu'amine de formule (I), une polyéthylèneimine ayant une masse molaire de Mw 1 000 à Mw 70 000.

**7.** Procédé de préparation d'une composition pigmentaire selon la revendication 1 ou 3, caractérisée en ce qu'on traite

(a') un pigment organique revêtu de 0,5 à 100% en masse, par rapport au pigment, d'un complexe de phosphate métallique, par
(b') une quantité de 0,5 à 15% en masse, de préférence de 10% en masse, de manière particulièrement préférée jusqu'à 5% en masse, par rapport au pigment, d'une amine ou d'un sel d'ammonium correspondant.

**8.** Procédé de préparation d'une composition pigmentaire selon la revendication 1 ou 3, caractérisé en ce qu'on traite

(a') un pigment organique revêtu de 0,5 à 100% en masse, par rapport au pigment, d'un complexe de phosphate métallique, par

(ii') une amine ou sel d'ammonium, puis par

(b') une quantité de 0,5 à 15% en masse, de préférence de 10% en masse, de manière particulièrement préférée jusqu'à 5% en masse, par rapport au pigment, d'une amine de formule (I) ou d'un sel d'ammonium de formule (II).

**9.** Procédé de préparation d'une composition pigmentaire selon la revendication 1 ou 3, caractérisée en ce qu'on traite un pigment organique simultanément ou successivement dans l'ordre (b")-(a")-(c") ou en particulier (a")-(b")-(c"), par

(a") un sel ou complexe chélaté correspondant de Ca, Mg, Al, Zn, Zr et/ou Ti,
(b") un composé fournisseur d'ions phosphate, et
(c") une amine ou sel d'ammonium correspondant.

**10.** Procédé selon la revendication 7, 8 ou 9, dans lequel on utilise le chlorure de calcium, l'acétate de calcium, le dicitrate tricalcique, le chlorure de magnésium, l'acétate de magnésium, le sulfate d'aluminium, l'acétylacétonate d'aluminium, le sulfate de zinc, l'acétate de zinc ou l'acétylacétonate de zinc.

**11.** Procédé selon la revendication 7, 8 ou 9, dans lequel on utilise un sel ou complexe de Zr ou de Ti pris parmi le sulfate de zirconium, l'ammoniumcarbonate de zirconium, l'acétate de zirconium, le propionate de zirconium, le chlorure de zirconyle, le chlorure de titane(IV) ou le sulfate de titanyle et en particulier les chélates de formules

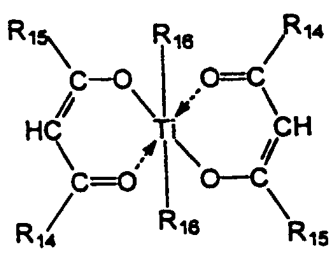 (III), 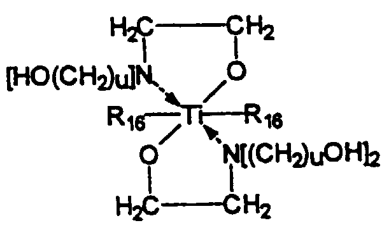 (IV) ou 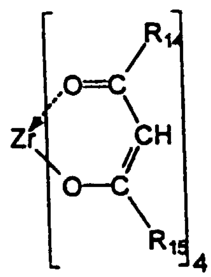 (V),

où

u est nombre de 1 à 3, de préférence 2,
$R_{14}$ représente des groupes méthyle, éthyle, méthoxy ou éthoxy, de préférence méthyle ou éthoxy,
$R_{15}$ représente des groupes méthyle ou éthyle, de préférence méthyle, et
$R_{16}$ représente des atomes d'halogènes ou des groupes alkoxy en $C_1$-$C_4$, de préférence alkoxy en $C_1$-$C_4$, de manière particulièrement préférée isopropoxy ou un mélange de ses matières.

**12.** Procédé selon la revendication 7, 8 ou 9, où on emploie un composé fournisseur des ions phosphate pris parmi l'acide orthophosphorique, des orthophosphates, comme $MH_2PO_4$, $M_2HPO_4$ ou $M_3PO_4$, l'acide métaphosphorique, le sel de Knorre [$(NaPO_3)_3 \cdot 6H_2O$], le sel de Graham [$(NaPO_3)_6$], le Calgon [$(NaPO_3)_{12\text{-}13} \cdot Na_2O$], $M_2H_2P_2O_7$ et $M_4P_2O_7$, où M représente Na, K ou $NH_4$, de préférence des orthophosphates, en particulier $Na_2HPO_4$ ou $Na_3PO_4$.

**13.** Matière organique de haut poids moléculaire contenant une composition pigmentaire selon l'une des revendications 1 à 6.

**14.** Matière organique de haut poids moléculaire selon la revendication 13, caractérisée en ce qu'il s'agit d'un vernis ou d'une encre d'imprimerie, de préférence d'un vernis automobile ou d'un laquage à effet décoratif.

**15.** Matière organique de haut poids moléculaire selon la revendication 13, caractérisée en ce qu'il s'agit d'un vernis et qu'on utilise, en tant qu'amine de formule (I), une polyéthylèneimine ayant une masse mlaire de Mw 2 000 à Mw 70 000.